(19) Europäisches Patentamt

European Patent Office

Office européen des brevets

(11) **EP 2 618 238 A1**

(12) **EUROPEAN PATENT APPLICATION**

(43) Date of publication:
 24.07.2013 Bulletin 2013/30

(51) Int Cl.:
 *G06F 3/01* (2006.01) *G06F 3/0481* (2013.01)
 *B60K 37/06* (2006.01)

(21) Application number: 12198001.5

(22) Date of filing: 19.12.2012

(84) Designated Contracting States:
 AL AT BE BG CH CY CZ DE DK EE ES FI FR GB
 GR HR HU IE IS IT LI LT LU LV MC MK MT NL NO
 PL PT RO RS SE SI SK SM TR
 Designated Extension States:
 BA ME

(30) Priority: 20.01.2012 JP 2012010316

(71) Applicant: AISIN AW CO., LTD.
 Anjo-shi, Aichi 444-1192 (JP)

(72) Inventors:
 • Matsuoka, Masatoshi
  Anjo-shi, Aichi 444-1192 (JP)
 • Tanaka, Saijiro
  Anjo-shi, Aichi 444-1192 (JP)

(74) Representative: TBK
 Bavariaring 4-6
 80336 München (DE)

(54) **Operation input system**

(57) An operation input system comprising: a touch pad having an operation surface and sensing an object in contact with or in proximity to the operation surface to sense a position of the object; plural protrusion members arranged along the operation surface, distal end portions of which protruding from the operation surface; a protrusion control section controlling a position of the protrusion member with respect to the operation surface; and a display device provided separately from the touch pad, displaying an image on a display screen. In case that the display screen is divided into plural screen regions displaying independent images, the protrusion control section divides the operation surface into plural operation surface regions corresponding to respective screen regions, sets a boundary between the operation surface regions such that an area of each operation surface region corresponds to a display content of the corresponding screen region, irrespective of a ratio in area between the plural screen regions, and causes the protrusion members to be protruded along the boundary.

FIG. 21

**Description**

BACKGROUND OF THE INVENTION

The present invention relates to an operation input system including a touch pad serving as a pointing device.

Description of the Related Art

Devices including an operation input system as standard equipment are utilized in laptop personal computers etc., for example. The operation input system includes a touch pad serving as a pointing device. A user performs a slide operation using a fingertip, the tip of a stylus pen, or the like on an operation surface provided on a surface of the touch pad to move an operation cursor displayed on a display screen communicably connected to the touch pad. In addition, the user performs a predetermined operation on the operation surface with the operation cursor displayed on the display screen located over an operation figure (such as an operation icon, for example) to achieve a function associated with the operation figure. The thus configured operation input system including the touch pad may be utilized to input a predetermined operation to in-vehicle navigation apparatuses.

The in-vehicle navigation apparatuses are often operated by a driver of a vehicle. In such a case, the user (a driver of the vehicle) operates the navigation apparatus in between driving. Therefore, it is difficult to perform an operation while closely watching the display screen, and a desired operation may not be performed accurately. In view of this point, there is proposed an operation input system that allows to perform operation input utilizing tactile sensation (a tactile feel) without closely watching a display screen. For example, Japanese Patent Application Publication No. 2006-268068 (JP 2006-268068 A) discloses a technology by which the entirety of an operation surface is covered with fiber hair and fiber hair provided at a position on the operation surface corresponding to the position of an operation figure displayed on a display device is caused to stand up. In the system according to JP 2006-268068 A, however, the entirety of the operation surface is covered with fiber hair. Thus, there remains an ambiguity in discrimination through tactile sensation between standing fiber hair standing and non-standing fiber hair.

In some navigation apparatuses, a screen displayed on a display device is divided to display a plurality of different screens such as a map and route information, a map and a television broadcast screen, or the like. In the case where such a plurality of different screens are provided, it may be difficult to distinguish between the screens on an operation surface, and it may be difficult for the user to know which of the screens he/she is operating. Simply providing a partition line on the operation surface may rather hinder operations performed through tactile sensation. From the viewpoint of convenience to the user, it is preferable that operation input may be performed more intuitively. The operation input system according to the related art leaves room for improvement in this point.

SUMMARY OF THE INVENTION

In view of the foregoing, it is an object of the invention to provide an operation input system that enables to perform reliable operation input compared to the related art without closely watching a display screen, and that enables to perform operation input in a highly convenient manner.

This object is achieved by an operation input system according to claim 1. Advantageous further developments are as set forth in the dependent claims.

In view of the foregoing issue, an aspect of the present invention provides an operation input system including:

a touch pad that includes an operation plate, on a surface of which an operation surface is formed, and senses an object to be sensed in contact with or in proximity to the operation surface to receive input corresponding to a position of the sensed object;
a plurality of protrusion members arranged in accordance with a predetermined rule along the operation surface and distal end portions of which can penetrate through the operation plate to protrude from the operation surface;
a protrusion control section that controls positions of the protrusion members with respect to the operation surface in a protrusion direction; and
a display device provided separately from the touch pad, the display device including a display screen and displaying an image on the display screen, in which
in the case where the display screen is divided into a plurality of screen regions that display independent image, the protrusion control section divides the operation surface into a plurality of operation surface regions corresponding to respective ones of the plurality of screen regions, the number of the operation surface regions being the same as the number of the screen regions, sets a boundary between the operation surface regions such that an area of each of the operation surface regions matches a display content of the corresponding screen region, irrespective of a ratio in area between the plurality of screen regions, and causes the protrusion members to be protruded along the boundary.

According to the aspect, a predetermined operation can be input to another device communicably connected to the operation input system in accordance with the position of the object to be sensed in contact with or in proximity to the operation surface of the touch pad. In the case where the display screen of the display device is divided into a plurality of screen regions, in general, the screen regions are often configured to receive different types of input as well. Thus, in the case where the user performs a predetermined operation in a particular screen region, an operation is preferably performed in a region corresponding to the particular screen region also on the operation surface of the touch pad. According to the aspect, the operation surface is divided into a plurality of operation surface regions in correspondence with the screen regions formed by dividing the display screen. The protrusion members penetrate through the operation plate on the surface of the touch pad to protrude from the operation surface along the boundary between the operation surface regions. As a result, the stereoscopic boundary formed by the protrusion members protruded from the operation surface makes each operation surface region clearly distinguishable by the user. That is, the user can clearly recognize the operation surface region corresponding to the particular screen region for which it is desired to input a predetermined operation.

According to the aspect, further, the area of each operation surface region is set in accordance with the display content of each screen region, irrespective of the ratio in area between the plurality of screen regions. The type of a predetermined operation input by the user, the number of operation locations that should be distinguished during a predetermined operation, and so forth differ depending on the display content of each screen region. Therefore, the area required for the operation surface region also differs depending on the display content of the corresponding screen region. With the area of each operation surface region set in accordance with the display content of each screen region, it is possible to appropriately secure the area of each operation surface region required for a predetermined operation, which enables to favorably detect a predetermined operation performed by the user in each operation surface region. That is, the user can perform reliable operation input compared to the related art without closely watching the display screen, and an operation input system that enables to perform operation input in a highly convenient manner is provided.

In the case where a particular operation figure is displayed in at least one of the screen regions, the protrusion control section of the operation input system according to an aspect of the present invention may set the boundary between the operation surface regions such that the area of each of the operation surface regions corresponds to the number of the operation figures provided in the corresponding screen region. That is, in the case where the display screen is divided into a plurality of screen regions that display independent images and a particular operation figure is displayed in at least one of the screen regions, the protrusion control section may divide the operation surface into a plurality of operation surface regions corresponding to respective ones of the plurality of screen regions, the number of the operation surface regions being the same as the number of the screen regions, set the boundary between the operation surface regions such that the area of each of the operation surface regions corresponds to the number of operation figures provided in the corresponding screen region, and cause the protrusion members to be protruded along the boundary. That is, in one more specific aspect, the area of each operation surface region, which is set in accordance with the display content of each screen region, is set in accordance with the number of operation figures provided in each screen region. In other words, the area of each operation surface region is set in accordance with the number of operation locations that should be distinguished during a predetermined operation. This allows the operation figures in each screen region to be appropriately distributed in the corresponding operation surface region, which enables to favorably detect a predetermined operation performed by the user in each operation surface region. That is, the user can perform reliable operation input compared to the related art without closely watching the display screen, and an operation input system that enables to perform operation input in a highly convenient manner is provided.

In the case where a particular operation figure is displayed in at least one of the screen regions, the protrusion control section of the operation input system according to an aspect of the present invention may set the boundary such that the operation surface region corresponding to the screen region containing the larger number of the operation figures has a larger area, irrespective of a ratio in area between the plurality of screen regions. According to the aspect, an operation surface region corresponding to a screen region with the larger number of operation figures have a larger area, and thus the operation figures in each screen region are appropriately distributed in the corresponding operation surface region. For example, an appropriate gap that is uniform over the entire touch pad may be set between the positions corresponding to the operation figures in the operation surface regions. This enables the user to perform more reliable operation input.

In the case where a particular operation figure is displayed in at least one of the screen regions, the protrusion control section of the operation input system according to an aspect of the present invention may set the area of the operation surface region corresponding to each of the plurality of screen regions such that a ratio in area between the operation surface regions matches a ratio in number of the operation figures contained in each of the screen regions, irrespective of a ratio in area between the plurality of screen regions. With the area of each of the operation surface regions thus set such that the ratio in area between the operation surface regions matches the ratio in number of operation figures contained in the screen regions, the operation figures in each screen region are appropriately distributed in the corresponding operation surface region. That is, the positions corresponding to the operation figures in the operation surface regions are distributed uniformly in a well-balanced manner substantially over the entire operation surface. As a result, the user can perform more reliable operation input.

The type of a predetermined operation input by the user may differ depending on the display content of each screen region. In this case, the operation method acceptable by each of the operation surface regions differs between the operation surface regions, and the area required for the operation surface region also differs depending on the acceptable operation method. With the area of each operation surface region set in accordance with the operation method, it is possible to appropriately secure the area of each operation surface region required for a predetermined operation. In one preferred aspect in which the boundary between the operation surface regions is set such that the area of each of the operation surface regions corresponds to the display content of the corresponding screen region, the protrusion control section of the operation input system according to an aspect of the present invention may set the area of each of the operation surface regions in accordance with an operation method corresponding to the display content of each of the screen regions and acceptable by the operation surface region corresponding to each screen region. As a result, it is possible to favorably detect a predetermined operation performed by the user in each operation surface region, which enables the user to perform more reliable operation input.

In one aspect in which the boundary between the operation surface regions is set such that the area of each of the operation surface regions corresponds to the display content of the corresponding screen region, the protrusion control section of the operation input system according to an aspect of the present invention may set the area of each of the operation surface regions in accordance with whether or not the operation method corresponding to the display content of each of the screen regions and acceptable by the operation surface region corresponding to each screen region includes a touch operation in which the object to be sensed is brought into contact with or into proximity to the operation surface region, or whether or not the operation method includes both a slide operation in which the object to be sensed is slid with the object to be sensed in contact with or in proximity to the operation surface region and the touch operation. While the touch operation is performed at substantially one point on the operation surface, the slide operation is performed at least linearly, or planarly, on the operation surface. An operation performed at a point and a linear or planar operation require different areas of the operation surface region. As a matter of course, a linear or planar operation requires a larger area of the operation surface region than an operation performed at a point. Thus, with the area of each operation surface region set as in the aspect, it is possible to more appropriately secure the area of each operation surface region required for a predetermined operation. As a result, the user can perform more reliable operation input.

In one aspect in which the boundary between the operation surface regions is set such that the area of each of the operation surface regions corresponds to the display content of the corresponding screen region, the display screen of the operation input system according to an aspect of the present invention may have a function of sensing an object to be sensed in contact with or in proximity to the display screen to receive input corresponding to a position of the sensed object, and the protrusion control section may set the area of each of the operation surface regions in accordance with an operation method corresponding to the display content of each of the screen regions on the display screen and acceptable by the screen region. The operation method acceptable by each of the screen regions on the display screen differs between the screen regions. In addition, the area required for the operation surface region also differs depending on the acceptable operation method. With the area of each operation surface region set in accordance with the operation method acceptable by each of the screen regions on the display screen, it is possible to appropriately secure the area of each operation surface region required for a predetermined operation. As a result, it is possible to favorably detect a predetermined operation performed by the user in each operation surface region, which enables the user to perform more reliable operation input.

In one aspect in which the boundary between the operation surface regions is set such that the area of each of the operation surface regions corresponds to the display content of the corresponding screen region, the display screen of the operation input system according to an aspect of the present invention may have a function of sensing an object to be sensed in contact with or in proximity to the display screen to receive input corresponding to a position of the sensed object, and the protrusion control section may set the area of each of the operation surface regions in accordance with whether or not the operation method corresponding to the display content of each of the screen regions on the display screen and acceptable by the screen region includes a touch operation in which the object to be sensed is brought into contact with or into proximity to the screen region, or whether or not the operation method includes both a slide operation in which the object to be sensed is slid with the object to be sensed in contact with or in proximity to the screen region and the touch operation. As discussed above, a slide operation requires a larger area of the operation surface region than a touch operation. With the area of each operation surface region set as in the aspect, it is possible to more appropriately secure the area of each operation surface region required for a predetermined operation, which enables the user to perform more reliable operation input.

As discussed above, the plurality of protrusion members can penetrate through the operation plate on the surface of the touch pad to protrude from the operation surface. The protrusion members can be moved between the protruded state and the retracted state by the protrusion control section. When the protrusion member is in the retracted state, a portion of the operation surface around the protrusion member is flat. When the protrusion member is in the protruded state, in contrast, the distal end portion of the protrusion member is distinctly protruded from the operation surface so as to be directly recognizable by a user through tactile sensation using a fingertip or the like. By bringing the protrusion member positioned at the coordinates on the operation surface corresponding to the coordinates of an operation figure displayed on a display device into the protruded state, for example, the user may easily perform operation input to the operation surface at that position in reliance on the protrusion member in the protruded state. In the case where a particular operation figure is displayed on the display screen, the protrusion control section of the operation input system according to an aspect of the present invention may cause the protrusion members provided in the operation surface region corresponding to each of the plurality of screen regions to be protruded from the operation surface such that an arrangement of the protruded protrusion members corresponds to an arrangement of the operation figures in each of the screen regions.

The operation input system according to an aspect of the present invention may further include a depiction control section that controls depiction of the image to be displayed on the display screen, and in the case where a particular operation figure is displayed on the display screen, the boundary is set within a predetermined distance from an outer periphery of the operation surface or from another boundary, and a plurality of the operation figures are provided in the screen region corresponding to a narrow operation surface region which is the operation surface region set between the boundary and the outer periphery or between the boundary and the other boundary, the protrusion control section may dispose the protrusion members provided in the narrow operation surface region and protruded from the operation surface in correspondence with the plurality of operation figures so as to be in parallel with the boundary, and the depiction control section may dispose the plurality of operation figures in the screen region corresponding to the narrow operation surface region such that an arrangement of the operation figures corresponds to an arrangement of the protrusion members established by the protrusion control section. According to the aspect, the arrangement of the operation figures in the screen region is changed in accordance with the arrangement of the regions corresponding to the operation figures in the operation surface region to make the arrangement of the operation figures in the screen region and the arrangement of the regions corresponding to the operation figures in the operation surface region common. As a result, the user can easily correlate the operation figures in the screen region with the regions corresponding to the operation figures in the operation surface region, which enables the user to perform more reliable operation input.

DESCRIPTION OF THE DRAWINGS

FIG. 1 is a schematic view showing an operation input system as mounted on a vehicle;
FIG. 2 is a block diagram showing a schematic configuration of a navigation apparatus;
FIG. 3 is a block diagram showing a schematic configuration of the operation input system ;
FIG. 4 is a simplified perspective view of a touch pad provided in an operation input device;
FIG. 5 is a sectional view showing the configuration of a drive mechanism;
FIG. 6 shows an example of operation input performed utilizing the operation input system;
FIG. 7 shows an example of operation input performed utilizing the operation input system ;
FIG. 8 shows an example of operation input performed utilizing the operation input system ;
FIG. 9 is a perspective view of the touch pad provided in the operation input device;
FIG. 10 is a flowchart showing the overall process procedures of an operation input reception process;
FIG. 11 is a flowchart showing the process procedures of an input determination process;
FIG. 12 shows the relationship between a display screen having a plurality of screen regions and operation surface regions of a touch pad according to a first example;
FIG. 13 is a flowchart showing the process procedures of setting operation surface regions according to the first example;
FIG. 14 is a flowchart showing the procedures of an operation surface region boundary setting process through operation figure number acquisition;
FIG. 15 is a flowchart showing the procedures of FIG. 14 using a specific example;
FIG. 16 is a flowchart showing the procedures of a protrusion member drive control process;
FIG. 17 shows the relationship between a display screen having a plurality of screen regions and operation surface regions of a touch pad according to a second example;
FIG. 18 is a flowchart showing the overall procedures of setting operation surface regions according to the second example;
FIG. 19 is a flowchart showing the procedures of an operation surface region boundary setting process through screen region characteristics acquisition;

FIG. 20 is a flowchart showing the procedures of FIG. 19 using a specific example;

FIG. 21 shows the relationship between a display screen having a plurality of screen regions and operation surface regions of a touch pad according to a form of a third example;

FIG. 22 shows the relationship between a display screen having a plurality of screen regions and operation surface regions of a touch pad according to another form of the third example;

FIG. 23 is a flowchart showing the procedures for rearranging operation figures in screen regions;

FIG. 24 shows the relationship between a display screen having a plurality of screen regions and operation surface regions of a touch pad according to a fourth example; and

FIG. 25 shows the relationship between a display screen having a plurality of screen regions and operation surface regions of a touch pad according to a fifth example.

DETAILED DESCRIPTION OF THE EMBODIMENTS

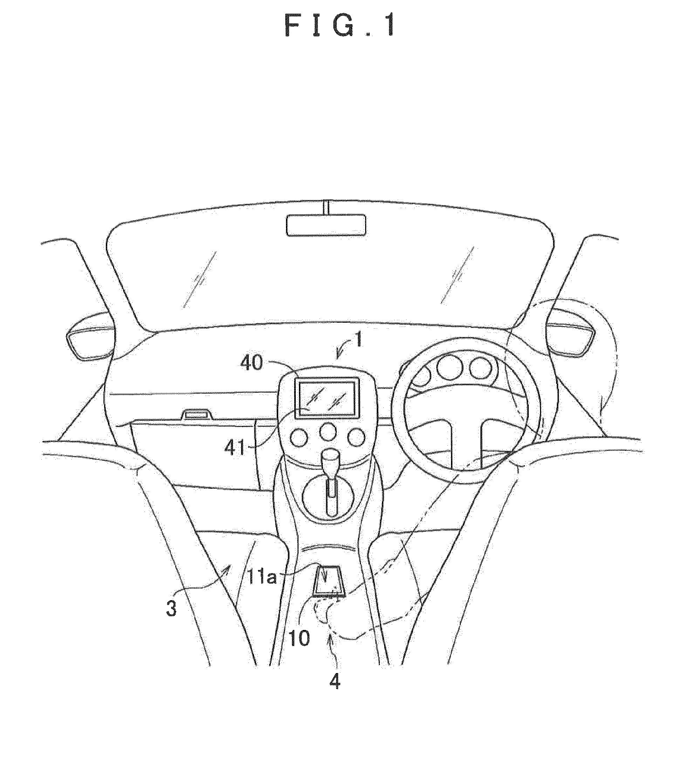

An operation input system according to an embodiment of the present invention will be described with reference to the drawings. In the embodiment, a system formed using an operation input device 4 configured to perform predetermined (prescribed) operation input to an in-vehicle navigation apparatus 1 (see FIG. 1) is described. The operation input device 4 forms an operation input system 3 together with a display input device 40 communicably connected to the navigation apparatus 1. In the following, a schematic configuration of the navigation apparatus 1, the configuration of the operation input device 4, the configuration of the operation input system 3, the procedures of an operation input reception process, and the procedures of a process for controlling an operation surface of the operation input device 4 will be described sequentially in this order.

1. Schematic Configuration of Navigation Apparatus

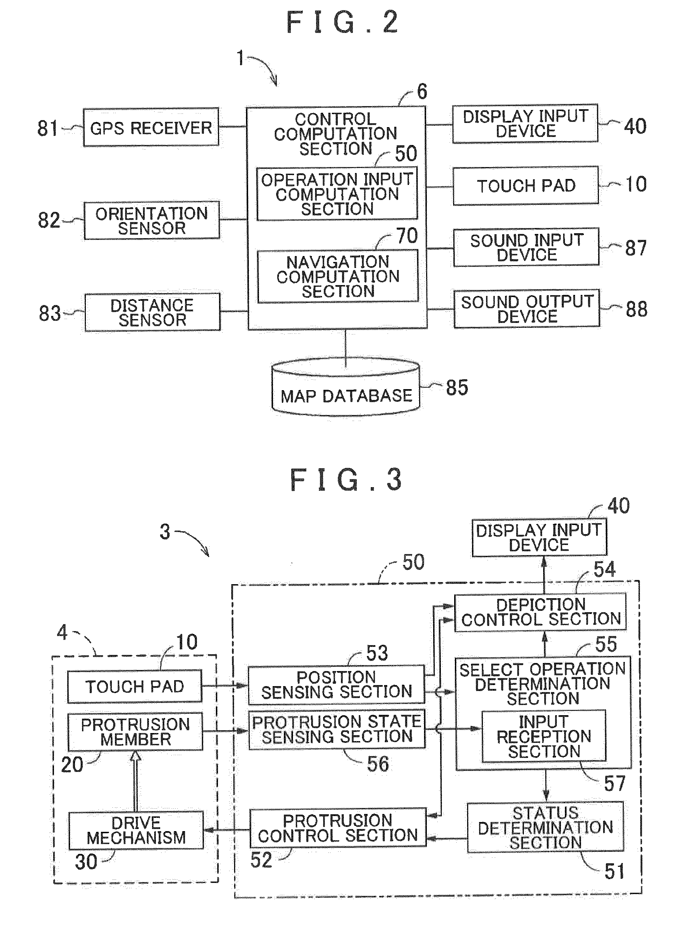

A schematic configuration of the navigation apparatus 1 will be described with reference to FIGS. 1 and 2. The navigation apparatus 1 is configured to achieve basic functions such as displaying the vehicle position, searching for a route from a departure place to a destination, providing route guidance, and searching for a destination. To this end, the navigation apparatus 1 includes a control computation section 6 as shown in FIG. 2. The control computation section 6 includes an arithmetic processing unit such as a CPU as its core member, and may be implemented by hardware, software, or a combination of both as a functional section configured to perform various processes on input data. The control computation section 6 includes a navigation computation section 70. In addition, the control computation section 6 is communicably connected to a GPS receiver 81, an orientation sensor 82, a distance sensor 83, a map database 85, the display input device 40, the touch pad 10, a sound input device 87, and a sound output device 88.

The GPS receiver 81 receives GPS signals from Global Positioning System (GPS) satellites. The orientation sensor 82 detects the orientation of travel of the vehicle or variations in orientation of travel of the vehicle. The distance sensor 83 detects the vehicle speed and the travel distance of the vehicle. As well known, the navigation computation section 70 can derive an estimated vehicle position on the basis of information obtained from the GPS receiver 81, the orientation sensor 82, and the distance sensor 83, and further on the basis of map matching known in the related art.

The map database 85 stores map data divided for each predetermined partition. The map data include road network data including the connection relationship between a plurality of nodes corresponding to intersections and a plurality of links corresponding to roads connecting between the nodes. Each node has information on its position on the map expressed by the latitude and the longitude. Each link has information such as the road type, the length of the link, and the road width as its attribute information. The map database 85 is referenced by the navigation computation section 70 during execution of processes such as displaying a map, searching for a route, and map matching. The map database 85 is stored in a storage medium such as a hard disk drive, a flash memory, or a DVD-ROM.

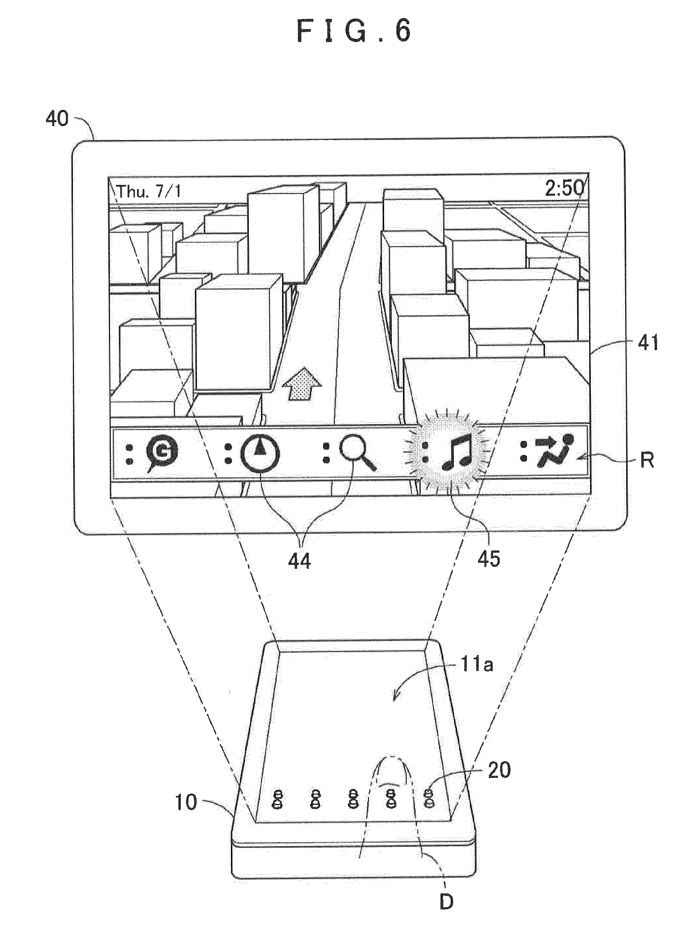

The display input device 40 is formed by integrating a display device such as a liquid crystal display device and an input device such as a touch panel. The display input device 40 includes a display screen 41, and displays on the display screen 41 a map of an area around the vehicle, images such as an operation figure 44 (see FIG. 6) associated with a predetermined function, and so forth, for example. In the embodiment, the display input device 40 corresponds to the "display device" according to the present invention. The operation figure 44 is a figure displayed on the display screen 41 to make it easy for the user (a passenger of the vehicle) to perceive a particular function to be achieved by operating the touch panel or the touch pad 10 to transfer operation input to the navigation apparatus 1. Examples of the operation figure 44 include operation icons, button images, and character key images depicted as illustrations or the like. The display input device 40 senses an object to be sensed in contact with or in proximity to the touch panel to receive input corresponding to the position of the sensed object. For example, the user may bring the object to be sensed such as a fingertip or the tip of a stylus pen in contact with or in proximity to the operation ffigure 44 displayed on the display screen 41 to select the operation figure 44 and achieve a function associated with the operation figure 44. In addition, the user may bring the object to be sensed in contact with or in proximity to a position other than the operation figure 44 displayed on the display screen 41 to select a location on a map, for example. The display input device 40 functions as a first operation input unit.

As shown in FIG. 1, the touch pad 10 is provided separately from the display input device 40. The touch pad 10 includes an operation surface 11a, and senses an object to be sensed D (see FIG. 6) in contact with or in proximity to the operation surface 11a to receive input corresponding to the position of the sensed object. An operation cursor 45 (see FIG. 6) is displayed on the display screen 41 in correspondence with the position of the object sensed by the touch pad 10 serving as a pointing device. The user slides the object to be sensed D such as a fingertip in contact with or in proximity to the operation surface 11a to move the operation cursor 45 on the display screen 41. Then, the user may perform a predetermined operation on the operation surface 11a with the operation cursor 45 located over the operation figure 44 to select the operation figure 44 and achieve a function associated with the operation figure 44. In addition, the user may perform a predetermined operation on the operation surface 11 a with the operation cursor 45 located over a position other than the operation figure 44 displayed on the display screen 41 to select a location on a map, for example. The touch pad 10 functions as a second operation input unit.

The display input device 40 is disposed at a position at which the display input device 40 may be seen without the need for the user (in particular, the driver of the vehicle) to significantly change his/her viewing direction during drive so as to be easily seeable by the user. In the example shown in FIG. 1, the display input device 40 is disposed at the center portion of the upper surface of a dashboard. However, the display input device 40 may be disposed in an instrument panel, for example. Meanwhile, the touch pad 10 is disposed at a position close to the hand of the user so as to be easily operable by the user. That is, the touch pad 10 is disposed at a position closer to the hand of the user and farther from the viewing direction than the display input device 40. In the example shown in FIG. 1, the touch pad 10 is disposed at a center console portion. However, the touch pad 10 may be disposed at the center portion of the upper surface of a dashboard, at a spoke portion of a steering wheel, or on a door panel, for example.

The sound input device 87 receives voice input from the user. The sound input device 87 includes a microphone or the like. The navigation computation section 70 may achieve functions such as searching for a destination through voice recognition and making a handsfree call on the basis of voice received through the sound input device 87. The sound input device 87 functions as a third operation input unit. The sound output device 88 includes a speaker or the like. The navigation computation section 70 may achieve functions such as providing voice guidance via the sound output device 88.

In the present invention, the specific configuration of the touch pad 10 serving as the second operation input unit, among various devices communicably connected to the navigation apparatus 1, has a novel feature in contrast to its counterpart according to the related art. Thus, the configuration of the operation input device 4 formed to include the touch pad 10 and the configuration of the operation input system 3 formed to include the operation input device 4 will be described in detail below.

2. Configuration of Operation Input Device

As shown in FIGS. 3 to 5 and 9, the operation input device 4 includes the touch pad 10, protrusion members 20, and drive mechanisms 30. The operation input device 4 is schematically configured such that the protrusion members 20 driven by the drive mechanisms 3 0 can protrude (appear and disappear) from the surface of the touch pad 10.

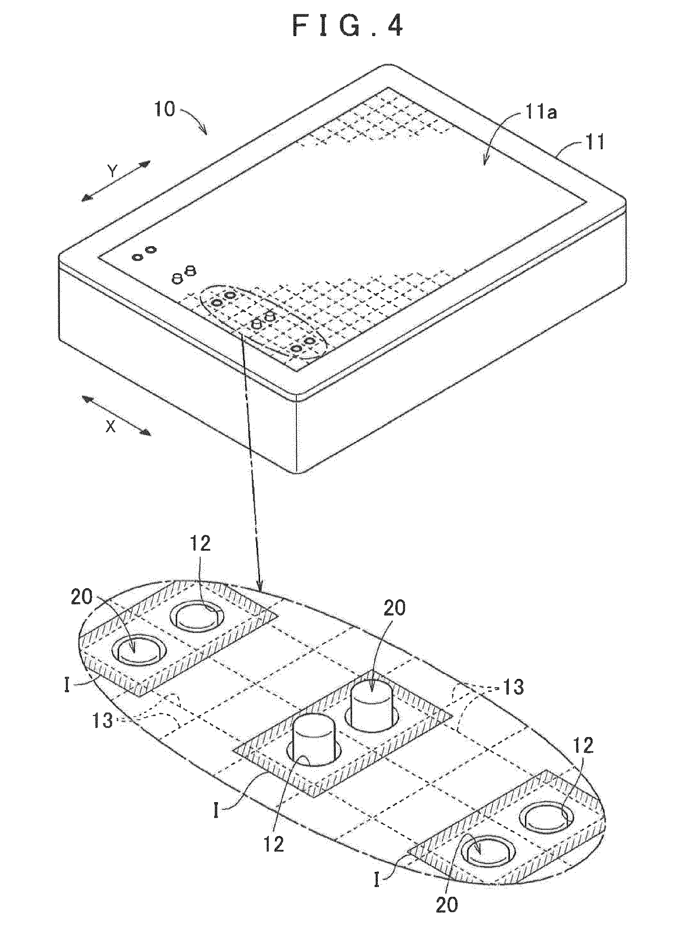

As shown in FIGS. 4, 5, and 9, the touch pad 10 includes an operation plate 11, and the operation surface 11a is formed on the surface of the operation plate 11. The thus configured touch pad 10 may be of a variety of types such as a resistance film type and a capacitance type. In the example, the touch pad 10 is of the capacitance type. A substrate and an electrode layer are provided on the back surface side of the operation surface 11a. The touch pad 10 senses the object to be sensed D such as a fingertip in contact with or in proximity to the operation surface 11a to receive input corresponding to the position of the sensed object.

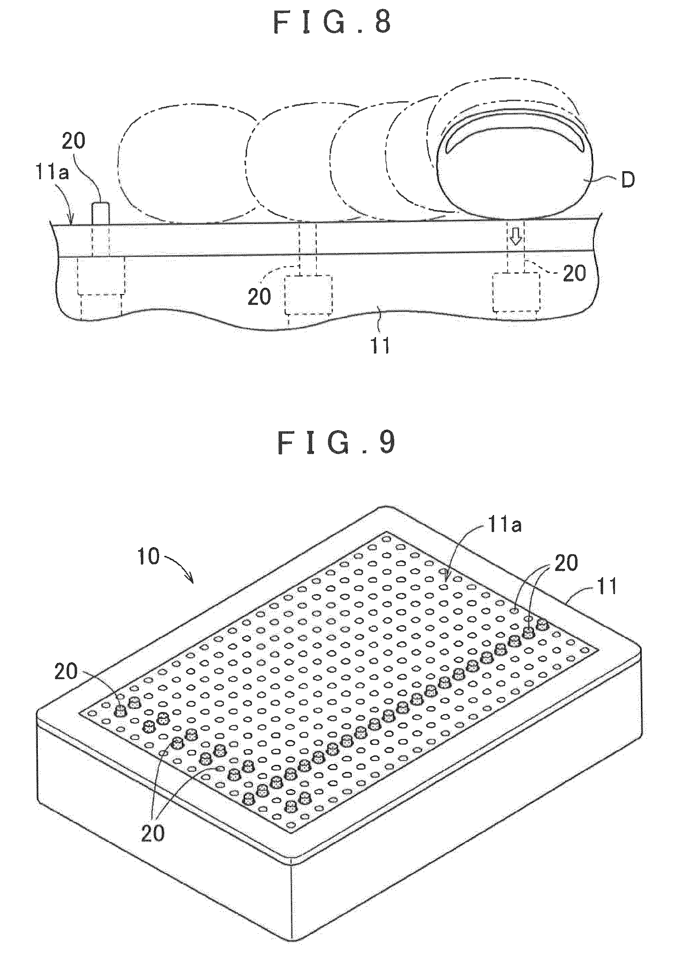

The operation plate 11 is provided with a hole portion 12 that penetrates through the operation plate 11. In the embodiment, as shown in FIG. 9, a multiplicity of hole portions 12 and protrusion members 20 are arranged regularly over the entire operation surface 11a. In the embodiment, in addition, each of the hole portions 12 is formed to have a circular shape as seen from the surface side of the operation plate 11. Conductive wiring members 13 connected to the electrode layer provided on the back surface side of the operation surface 11a are disposed in a grid along the operation surface 11a, and each of the hole portions 12 is provided so as to avoid the wiring members 13. That is, each of the hole portions 12 is provided so as not to interfere with any of the wiring members 13. This prevents the function of the touch pad 10 from being impaired by the plurality of hole portions 12 provided in the operation plate 11. The protrusion member 20 is inserted into each of the hole portions 12. In the embodiment, a plurality of (in the embodiment, the same number as the number of the hole portions 12) protrusion members 20 are also provided. The protrusion members 20 are provided so as to be freely advanced and retracted independently over the entire operation surface 11a under control by a protrusion control section 52 (see FIG. 3).

A detailed configuration of the operation input device 4 will be described below. For ease of description, a simplified structure illustrated in FIG. 4 is used, That is, ten hole portions 12 are provided. In the example, two hole portions 12 are arranged along the Y direction of the operation surface 11a, and a total of five pairs of such hole portions 12 are arranged at equal intervals along the X direction. The protrusion member 20 is inserted into each of the hole portions 12. Thus, in the example, a plurality of (in the example, ten, as with the hole portions 12) protrusion members 20 are also provided. In addition, two protrusion members 20 are arranged along the Y direction of the operation surface 11a, and five pairs of such protrusion members 20 are arranged at equal intervals along the X direction. A region on the touch pad 10 in which the hole portions 12 and the protrusion members 20 are disposed corresponds to a region on the display screen 41 in which an operation figure display region R (see FIG. 6) to be discussed later is disposed.

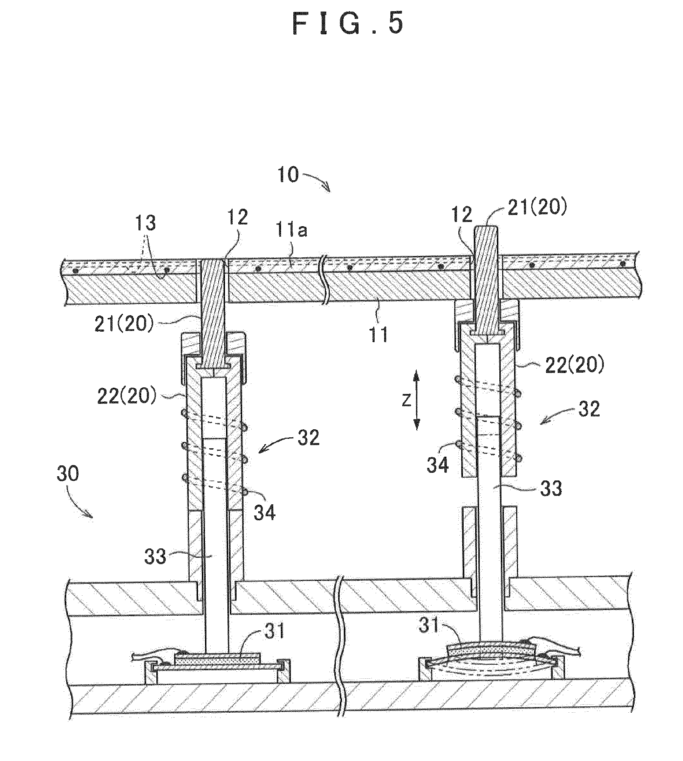

As shown in FIG. 5, the protrusion member 20 includes a pin member 21 formed in the shape of an elongated circular column (pin) and a tubular member 22 that is generally cylindrical. The diameter of the pin member 21 is slightly smaller than the diameter of the hole portion 12. The tubular member 22 is formed by two semi-cylindrical members obtained by dividing the tubular member 22 into two equal halves along the axial direction of the tubular member 22. The pin member 21 is retained by the tubular member 22 with the lower end portion of the pin member 21 sandwiched between the two semi-cylindrical members. In the example, the distal end portion (upper end portion) of the pin member 21 is inserted into each of the hole portions 12. In a reference state (state on the left side of FIG. 5) in which the protrusion member 20 is not driven by the drive mechanism 30, the distal end portion (distal end surface) of the pin member 21 which is formed to be flat is flush with the level of the operation surface 11a.

As shown in FIG. 5, the drive mechanism 30 is provided on the back surface side with respect to the operation plate 11. The drive mechanism 30 is configured to cause advancing/retracting operation of the protrusion member 20 along a direction (referred to as "advancing/retracting operation direction Z") intersecting (in the example, orthogonally intersecting) the operation surface 11a. The drive mechanism 30 includes a piezoelectric element 31.

The piezoelectric element 31 is a passive element that utilizes a piezoelectric effect, and converts a voltage applied to a piezoelectric body into a force, or converts an external force applied to the piezoelectric body into a voltage. The piezoelectric element 31 is provided to vibrate in the advancing/retracting operation direction Z. A coupling member 33 is coupled to the piezoelectric element 31 to vibrate together with the piezoelectric element 31. The coupling member 33 is formed in the shape of an elongated circular column (pin). The distal end portion of the coupling member 33 opposite to the side on which the coupling member 33 is coupled to the piezoelectric element 31 is inserted into a space inside the tubular member 22. The diameter of the coupling member 33 is substantially equal to the inside diameter of the tubular member 22. The outer peripheral surface of the coupling member 33 and the inner peripheral surface of the tubular member 22 contact each other.

A spring member 34 is provided at a position at which the coupling member 33 and the tubular member 22 contact each other so as to surround the tubular member 22 from the outer peripheral side. The spring member 34 provides an inward preliminary pressure with a predetermined magnitude to cause a predetermined friction force between the coupling member 33 and the tubular member 22 forming the protrusion member 20. The preliminary pressure applied by the spring member 34 is set such that the static friction force between the coupling member 33 and the tubular member 22 is at least larger than a component of a gravitational force acting on the protrusion member 20 in the advancing/ retracting operation direction Z. In addition, the preliminary pressure is set such that the coupling member 33 and the tubular member 22 can slide with respect to each other with a dynamic friction force caused between the coupling member 33 and the tubular member 22 along with vibration of the piezoelectric element 31. In the embodiment, a slide mechanism 32 is formed by a slide section formed by the tubular member 22 and the coupling member 33 and the spring member 34 serving as a preliminary pressure application unit.

In the embodiment, in addition, the magnitude relationship between the speed of vibration of the piezoelectric element 31 to one direction side along the advancing/retracting operation direction Z and the speed of vibration of the piezoelectric element 31 to the other side can be adjusted by the protrusion control section 52 (see FIG. 3) included in the operation input computation section 50 to be discussed later. When the speed of vibration to the protrusion direction side (surface side with respect to the operation surface 11a) is lower than the speed of vibration to the retraction direction side (back surface side with respect to the operation surface 11a), the protrusion member 20 is moved to the protrusion direction side on the basis of the difference between the static friction and the dynamic friction caused between the coupling member 33 and the tubular member 22. This allows the distal end portion of the protrusion member 20 (pin member 21) to be protruded to the surface side with respect to the operation surface 11a. That is, the protrusion member 20 may be brought into a state (protruded state) in which the distal end portion of the protrusion member 20 penetrates through the operation plate 11 to be protruded to the surface side with respect to the operation surface 11a.

When the speed of vibration to the retraction direction side is lower than the speed of vibration to the protrusion direction side, on the other hand, the protrusion member 20 is moved to the retraction direction side. That is, the protrusion member 20 may be brought into a state (retracted state) in which the distal end portion of the protrusion member 20 is retracted to the back surface side with respect to the operation surface 11a. The "retracted state" includes a state in which the distal end portion of the pin member 21 of the protrusion member 20 is flush with the level of the operation surface 11a.

In the embodiment, the drive mechanism 30 is formed by the piezoelectric element 31 and the slide mechanism 32. The drive mechanism 30 may include the protrusion control section 52 which provides the piezoelectric element 31 with a pulsed drive signal. The plurality of protrusion members 20 can be independently moved between the protruded state and the retracted state by the drive mechanism 30. The operation input device 4 according to the embodiment thus includes a combination of the touch pad 10 and the plurality of protrusion members 20 provided so as to freely appear and disappear from the operation surface 11a of the touch pad 10.

3. Configuration of Operation Input System

As shown in FIG. 3, the operation input system 3 includes the operation input device 4 discussed above, the display input device 40, and the operation input computation section 50 interposed between the operation input device 4 and the display input device 40. In the embodiment, the operation input computation section 50 is incorporated in the control computation section 6 forming the navigation apparatus 1 (see FIG. 2). It should be noted, however, that the present invention is not limited to such a configuration, and that the operation input computation section 50 may be provided independently of the control computation section 6. The operation input device 4 and the display input device 40 are communicably connected to each other via the operation input computation section 50.

The operation input computation section 50 includes a status determination section 51, the protrusion control section 52, a position sensing section 53, a depiction control section 54, and a select operation determination section 55. In the embodiment, in addition, the operation input computation section 50 further includes a protrusion state sensing section 56 and an input reception section 57.

The status determination section 51 determines a protrusion status representing the state of protrusion of each of the protrusion members 20 in accordance with the image content displayed on the display screen 41. In the embodiment, the protrusion status includes the "protruded state" and the "retracted state". The "retracted state" is a state in which the protrusion member 20 is at the minimally displaced position within its movable range in the advancing/retracting operation direction Z (with the distal end portion of the pin member 21 flush with the level of the operation surface 11a). The "protruded state" is a state in which the protrusion member 20 is at the maximally displaced position within its movable range in the advancing/retracting operation direction Z. In the embodiment, the status determination section 51 determines which one of the protruded state and the retracted state each of the protrusion members 20 is to be brought into.

As discussed above, the display screen 41 may display an image of the operation figure 44 associated with a predetermined function besides a map image of an area around the vehicle position. For example, in the example shown in FIG. 6, images of five operation figures 44 are displayed side by side in a horizontal row at equal intervals in the operation figure display region R set on the lower side on the display screen 41, and superimposed on the map image of the area around the vehicle position. Such operation figures 44 correspond to main functions for operating the navigation apparatus 1 and various accessories of the vehicle. For example, the operation figures 44 are associated with a probe traffic information display function, a vehicle position display function, a destination search function, an audio setting function, and an air conditioner setting function, sequentially in this order from the left.

The status determination section 51 correlates the coordinates of the display screen 41 and the coordinates of the operation surface 11a, and determines that the protrusion status of one or more protrusion members 20 positioned at the coordinates on the operation surface 11a corresponding to the coordinates on the display screen 41 of the operation figure 44 being displayed is the protruded state. In the embodiment, the status determination section 51 determines that the protrusion status of each of a pair of (two) protrusion members 20 arranged in the Y direction for one displayed operation figure 44 is the protruded state. On the other hand, the status determination section 51 determines that the protrusion status of the protrusion members 20 positioned at the coordinates on the operation surface 11a corresponding to the coordinates on the display screen 41 of a region in which the operation figure 44 is not displayed is the retracted state. In the example of FIG. 6, images of five operation figures 44 are displayed in the operation figure display region R, five being the upper limit number of displayable operation figures 44. Thus, it is determined that the protrusion status of all the ten protrusion members 20 is the protruded state.

In the case where the protrusion members 20 are arranged regularly over the entire operation surface 11a as illustrated in FIG. 9, it is determined that protrusion members 20 assigned to the coordinates on the operation surface 11a corresponding to the coordinates of five operation figures 44 on the display screen are in the protruded state. For example, it is determined that the protrusion status of ten protrusion members 20 disposed at the corresponding coordinates, among the multiplicity of protrusion members 20 disposed regularly over the entire operation surface 11a, is the protruded state, and that the protrusion status of the other protrusion members 20 is the retracted state.

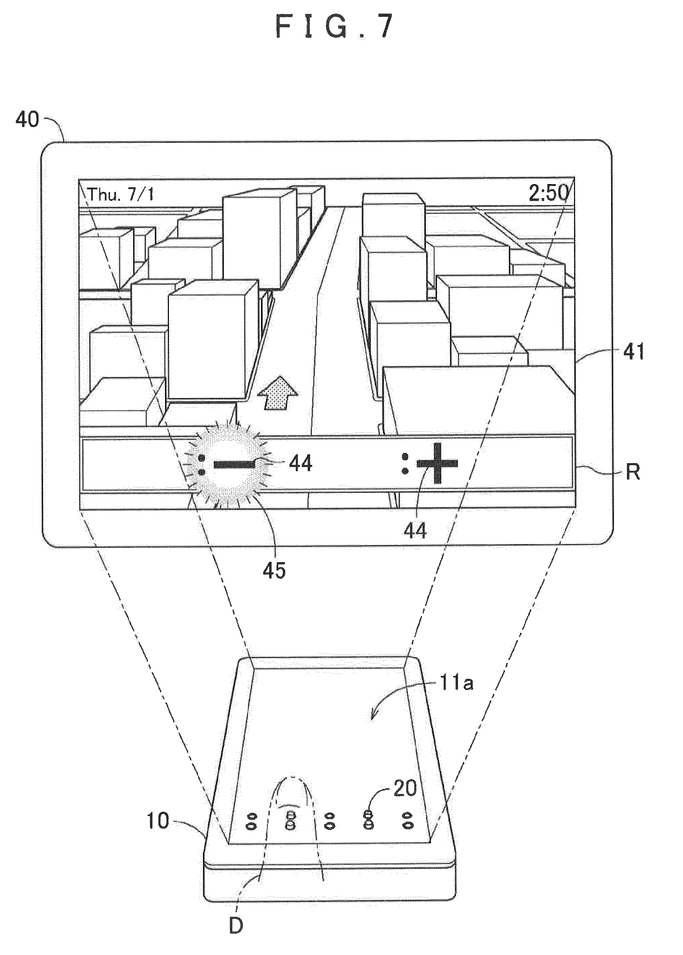

In the case where the image displayed on the display screen 41 is changed, in addition, the status determination section 51 determines a difference between the protrusion status corresponding to the image before the change and the protrusion status corresponding to the image after the change for each of the protrusion members 20. The status determination section 51 determines which one of "not changed", "transitioned to the protruded state", and "transitioned to the retracted state" is applied to each of the protrusion members 20. In the case where the operation figure 44 associated with the audio setting function is selected in FIG. 6, switching is made to a screen including images of two operation figures 44 for volume adjustment as shown by way of example in FIG. 7. In this case, among the five operation figures 44 displayed side by side, two at both ends and one at the center disappear, and the remaining two are maintained on display although the images are changed. Thus, in such a case, for example, the status determination section 51 determines that the protrusion status of each pair of (every two) protrusion members 20 arranged in the Y direction is "transitioned to the retracted state", "not changed", "transitioned to the retracted state", "not changed", and "transitioned to the retracted state", sequentially in this order along the Y direction.

The status determination section 51 outputs information on the protrusion status, or the difference in protrusion status, determined for each of the protrusion members 20 to the protrusion control section 52.

The protrusion control section 52 controls the position of the protrusion member 20 with respect to the operation surface 11a in the protrusion direction (which coincides with the advancing/retracting operation direction Z). The protrusion control section 52 controls the drive mechanism 30 on the basis of the information received from the status determination section 51. In the embodiment, the protrusion control section 52 vibrates the piezoelectric element 31 by applying a pulsed voltage. The protrusion control section 52 is configured to adjust the magnitude relationship between the speed of vibration to one direction side along the advancing/retracting operation direction Z and the speed of vibration to the other side. Such a configuration may be achieved by changing the duty ratio in accordance with the direction of vibration of the piezoelectric element 31. The protrusion control section 52 moves the protrusion member 20 to the protrusion direction side by making the speed of vibration to the protrusion direction side lower than the speed of vibration to the retraction direction side. On the other hand, the protrusion control section 52 moves the protrusion member 20 to the retraction direction side by making the speed of vibration to the retraction direction side lower than the speed of vibration to the protrusion direction side.

As discussed above, the results of the determination performed by the status determination section 51 are based on whether or not the operation figure 44 is displayed at a predetermined position of the display screen 41. Therefore, in the case where a particular operation figure 44 is displayed on the display screen 41, the protrusion control section 52 brings the protrusion member 20 positioned at the coordinates on the operation surface 11a corresponding to the coordinates of the operation figure 44 into the protruded state (see FIGS. 6 and 7) by controlling the drive mechanism 30 on the basis of the determination results. In the embodiment, a pair of (two) protrusion members 20 are brought into the protruded state for one operation figure 44. That is, the protrusion control section 52 expresses each operation figure 44 in the form of two protrusion portions arranged side by side in the Y direction of the operation surface 11a.

In addition, the protrusion control section 52 brings the protrusion members 20 positioned at the coordinates on the operation surface 11a corresponding to the coordinates on the display screen 41 of a region in which the operation figure 44 is not displayed into the retracted state (see FIG. 7). In this way, the protrusion control section 52 brings only the protrusion members 20 corresponding to a particular operation figure 44 displayed on the display screen 41 into the protruded state. In the case where the results of the determination performed by the status determination section 51 is obtained as the difference in protrusion status, the protrusion control section 52 maintains each of the protrusion members 20 in the protruded state or the retracted state, or switches each of the protrusion members 20 between the protruded state and the retracted state, on the basis of the determination results.

The protrusion control section 52 vibrates the piezoelectric element 31 for a predetermined time longer than the time required to switch the protrusion member 20 between the protruded state and the retracted state, and thereafter stops the vibration. That is, a voltage is applied to the piezoelectric element 31 only for the predetermined time, and thereafter application of the voltage is stopped. Even after application of the voltage is stopped, the protrusion member 20 maintains its position in the advancing/retracting operation direction Z through static friction between the coupling member 33 and the tubular member 22.

In the embodiment, the protrusion height of the protrusion member 20 which is brought into the protruded state (height of the distal end portion of the protrusion member 20 with reference to the operation surface 11a) is set to be relatively small. In the case where the object to be sensed D is a fingertip of the user as shown in FIG. 8, for example, the protrusion height may be so small that the difference in height can be absorbed by the flexibility of the ball of a finger intrinsic to a living body when the user slides his/her finger along the operation surface 11a. For example, the protrusion height may be equal to or less than 20% of the thickness of a fingertip. As a matter of course, the protrusion height may be more than that.

The position sensing section 53 acquires a sensed position of the object to be sensed D on the operation surface 11a of the touch pad 10. The position sensing section 53 specifies the position of an electrode most approached by the object to be sensed D on the basis of variations in capacitance of the electrodes caused when the object to be sensed D such as a fingertip is brought into contact with or into proximity to the operation surface 11a. Then, the position sensing section 53 acquires the specified position of the electrode as the sensed position on the operation surface 11a. The touch pad 10 may receive input corresponding to the sensed position on the operation surface 11a through such a function of the position sensing section 53. The position sensing section 53 outputs information on the acquired sensed position to the depiction control section 54 and the select operation determination section 55.

The depiction control section 54 controls depiction of an image to be displayed on the display screen 41. The depiction control section 54 generates a plurality of layers containing images of a background, roads, names of places, etc. around the vehicle position. In addition, the depiction control section 54 generates a layer containing an image of a vehicle position mark representing the vehicle position, and a layer containing an image of a route for guidance to a destination in the case where such a destination is set. Further, the depiction control section 54 generates a layer containing images of the predetermined operation figures 44, and a layer containing an image of the predetermined operation cursor 45. Then, the depiction control section 54 superimposes the generated layers to generate a single display image, and causes the display screen 41 to display the generated image.

The depiction control section 54 causes the main operation figures 44 to be displayed in the operation figure display region R set in the display screen 41 (see FIG. 6). The types of the operation figures 44 to be displayed may differ depending on a request from the user, the running state of the vehicle, or the like. The depiction control section 54 appropriately displays and hides the various types of the operation figures 44 depending on the situation.

In addition, the depiction control section 54 appropriately displays and hides the operation cursor 45 in accordance with a request from the user. In the embodiment, in the case where the position sensing section 53 does not sense contact of the object to be sensed D with or proximity of the object to be sensed D to the operation surface 11a, the depiction control section 54 hides the operation cursor 45. In the case where the position sensing section 53 senses contact of the object to be sensed D with or proximity of the object to be sensed D to the operation surface 11a, on the other hand, the depiction control section 54 displays the operation cursor 45, which has a circular shape in the example, at a position on the display screen 41 corresponding to the sensed position on the operation surface 11a. In the example, the operation cursor 45 is displayed such that the sensed position and the center position of the operation cursor 45 coincide with each other. In the case where the object to be sensed D in contact with or in proximity to the operation surface 11a is slid and the sensed position is also slid, the operation cursor 45 being displayed is also moved on the display screen 41 synchronously.

The select operation determination section 55 determines whether or not a select operation is performed for the operation figure 44 displayed on the display screen 41. The select operation determination section 55 determines whether or not a select operation is performed for the operation figure 44 on the basis of a predetermined operation performed on the operation surface 11a. In addition, in the case where the predetermined operation is sensed in a predetermined region including the position of the protrusion members 20 in the protruded state also on the basis of the position of the protrusion members 20, the select operation determination section 55 determines that a select operation for the operation figure 44 corresponding to the protrusion members 20 has been performed.

In the embodiment, two protrusion members 20 are assigned to one operation figure 44, and the pair of (two) protrusion members 20 have the same protrusion status at all times. Thus, one operation figure assignment region I (see FIG. 4) containing the positions of the pair of (two) protrusion members 20 is set as the "predetermined region" for the pair of (two) protrusion members 20. It should be noted, however, that adjacent operation figure assignment regions I are set so as not to overlap each other. In the configuration according to the embodiment, operation figure assignment regions I corresponding to pairs of protrusion members 20 that are adjacent in the X direction are set so as not to overlap each other. Examples of the "predetermined operation" for determination include an operation of bringing the object to be sensed D, which has not been in contact with the operation surface 11a, into contact with the operation surface 11a (touch operation), an operation of temporarily moving the object to be sensed D, which has been in contact with the operation surface 11a, away from the operation surface 11a and thereafter bringing the object to be sensed D into contact with the operation surface 11a again (tap operation), and an operation of performing two tap operations within a predetermined time (double-tap operation).

In the embodiment, the coordinates of the display screen 41 and the coordinates of the operation surface 11a are correlated with each other as discussed above, and only the protrusion members 20 corresponding to a particular operation figure 44 displayed on the display screen 41 are brought into the protruded state. When the protrusion members 20 are in the retracted state, a portion of the operation surface 11a around the protrusion members 20 is flat. When the protrusion members 20 are in the protruded state, in contrast, the distal end portions of the protrusion members 20 are distinctly protruded from the operation surface 11a to allow the user to directly recognize the difference in height through tactile sensation using a fingertip or the like. In addition, the user may easily associate the position of the protrusion member 20 on the operation surface 11a recognized through tactile sensation and the position of the operation figure 44 displayed on the display screen 41 with each other through comparison performed in his/her mind. The user may further perform a touch operation or the like at a desired position on the operation surface 11a in reliance on the protrusion member 20 recognized through tactile sensation at that position. This allows the user to easily select the desired operation figure 44 without seeing the touch pad 10 provided close to the hand of the user as a matter of course, or even with hardly seeing the display input device 40 provided at a position close to the viewing direction during drive. Thus, the operation input device 4 and the operation input system 3 according to the embodiment allow to perform reliable operation input compared to the related art without closely watching the display screen 41.

In the embodiment, in addition, each of the operation figures 44 displayed on the display screen 41 is expressed by a pair of (two) protrusion members 20 in the form of two protrusion portions arranged side by side. Therefore, the user may easily grasp the position of the operation figure assignment region I on the operation surface 11a by recognizing the two points at the same location through tactile sensation. In addition, the configuration of the drive mechanism 30 can be advantageously relatively simplified without increasing the number of protrusion members 20 more than necessary.

In the case where it is determined that a select operation for the operation figure 44 has been performed, the select operation determination section 55 outputs information representing the select operation to the navigation computation section 70 etc. to achieve a function associated with the selected operation figure 44. The select operation determination section 55 also outputs the information to the status determination section 51 and the depiction control section 54. Thus, in the case where the image displayed on the display screen 41 is changed in accordance with the function to be achieved next, the display image is updated, and the difference in protrusion status of each protrusion member 20 is determined accordingly.

The protrusion state sensing section 56 senses the protruded state and the retracted state of the protrusion members 20. The protrusion state sensing section 56 is configured to acquire information from a position sensor (not shown), for example. The protrusion state sensing section 56 senses whether the actual protrusion status of each protrusion member 20 is the protruded state or the retracted state on the basis of the acquired information on the position of the protrusion member 20 in the advancing/retracting operation direction Z. The protrusion state sensing section 56 outputs information on the sensing results to the input reception section 57 of the select operation determination section 55.

In the case where the protrusion state sensing section 56 senses that the protrusion member 20 has been changed from the protruded state to the retracted state, the input reception section 57 receives input to the protrusion member 20. In the embodiment, as described above, the protrusion members 20 corresponding to a particular operation figure 44 displayed on the display screen 41 have been brought into the protruded state. Therefore, receiving input to the protrusion member 20 is equivalent to receiving input to the operation figure 44 corresponding to the protrusion member 20. That is, in the case where it is sensed that the protrusion member 20 has been changed from the protruded state to the retracted state, the input reception section 57 receives input to the operation figure 44 corresponding to the protrusion member 20. The select operation determination section 55 determines on the basis of the received input that a select operation has been performed for the operation figure 44 corresponding to the protrusion member 20.

In the embodiment, in which the thus configured input reception section 57 is provided, a select operation for the operation figure 44 may be received via the protrusion member 20, besides a normal select operation received on the basis of a touch operation or the like on the touch pad 10. In this event, the user may select the desired operation figure 44 just by recognizing through tactile sensation a protrusion member 20 in the protruded state through a slide operation performed on the operation surface 11a using the object to be sensed D such as a fingertip and thereafter depressing the protrusion member 20 into the retracted state as shown in FIG. 8. That is, the user may select the operation figure 44 through an intuitive operation of taking the protrusion member 20 in the protruded state as a button and depressing the simulated button. Thus, the operation input device 4 and the operation input system 3 according to the embodiment allow to perform operation input in a highly convenient manner.

4. Process Procedures of Operation Input Reception Process

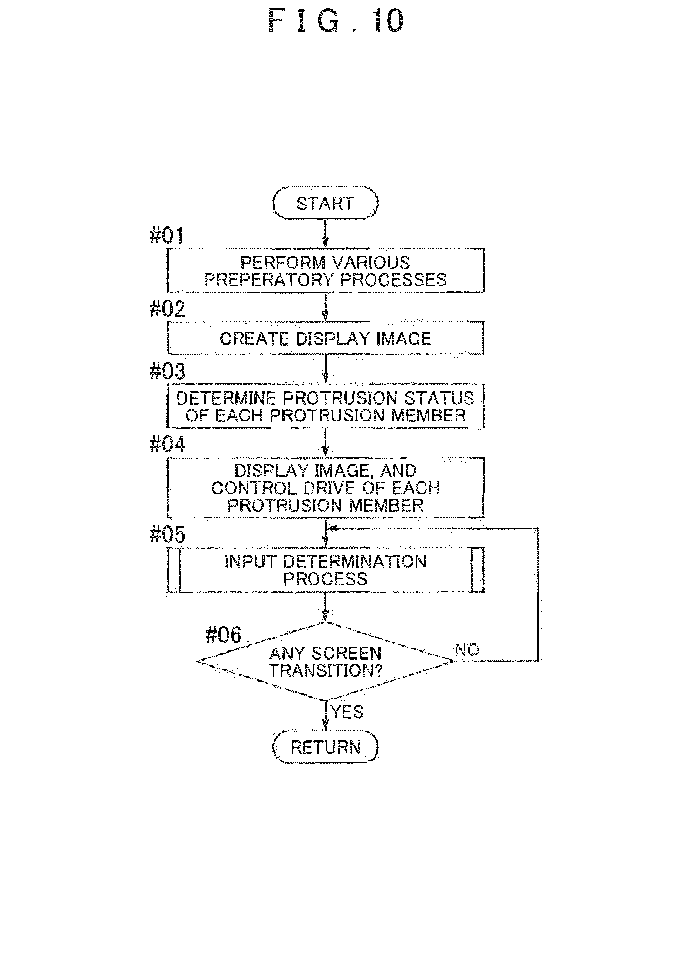

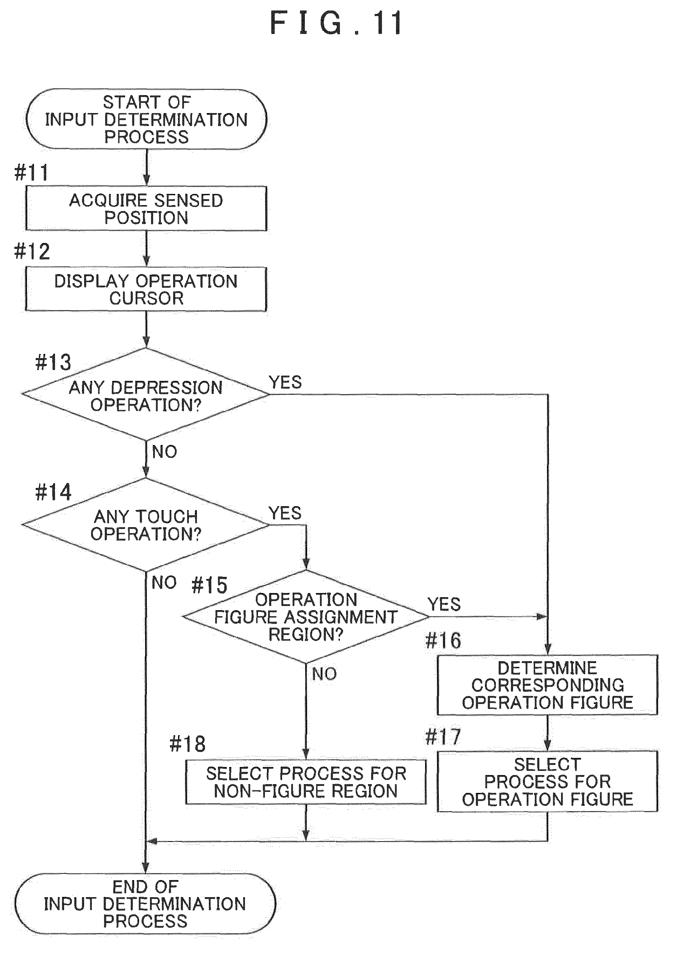

The process procedures of the operation input reception process performed by the operation input system 3 according to the embodiment will be described with reference to FIGS. 10 and 11. The procedures of the operation input reception process described below are executed by hardware or software (a program) implementing the functional sections of the operation input computation section 50, or a combination of both. In the case where the functional sections are implemented by a program, the arithmetic processing unit provided in the control computation section 6 including the operation input computation section 50 operates as a computer that executes the program implementing the functional sections.

In the operation input reception process, as shown in FIG. 10, first, various preparatory processes are executed (step #01). Examples of the preparatory processes include preparing a work area for preparing a display image. Next, a display image is actually prepared (step #02). The protrusion status of each protrusion member 20 is determined (step #03). The determination results are set in the form of ON/OFF, for example. Next, an image is displayed on the display screen 41 and the drive mechanism 30 drives the protrusion member 20 so as to be advanced and retracted (step #04) on the basis of the display image prepared in step #02 and the protrusion status determined in step #03. This causes the protrusion members 20 corresponding to a particular operation figure 44 displayed on the display screen 41 to be brought into the protruded state. The protrusion members 20 corresponding to the operation figures 44 which are not displayed are brought into the retracted state. An input determination process is executed in this state (step #05).

In the input determination process, as shown in FIG. 11, a sensed position of the object to be sensed D on the operation surface 11a is acquired (step #11). The operation cursor 45 is displayed at a position on the display screen 41 corresponding to the acquired position (step #12). In the case where the sensed position of the object to be sensed D is moved on the operation surface 11a, the operation cursor 45 being displayed is also moved on the display screen 41 accordingly. After that, it is determined whether or not an operation (depression operation) is performed to forcibly transition the protrusion member 20 which has been in the protruded state into the retracted state (step #13). In the case where it is determined that such a depression operation is not performed (step #13: No), it is determined whether or not a touch operation (including a tap operation and a double-tap operation) is performed on the operation surface 11a (step #14). In the case where it is determined that such a touch operation is not performed (step #14: No), the input determination process is terminated.

In the case where a touch operation is sensed in step #14 (step #14: Yes), it is determined whether or not the position at which the touch operation is sensed falls within the operation figure assignment region I (step #15). In the case where it is determined that the sensed position falls within the operation figure assignment region I (step #15: Yes) or in the case where it is determined in step #13 that a depression operation for the protrusion member 20 has been sensed (step #13: Yes), the type of the operation figure 44 corresponding to the operation figure assignment region I or the protrusion member 20 which has been subjected to the depression operation is determined (step #16). Then, the operation figure 44 is selected, and the function associated with the operation figure 44 (such as a destination search function or an audio setting function, for example) is achieved (step #17). After that, the input determination process is terminated. In the case where it is determined in step #15 that the sensed position does not fall within the operation figure assignment region I (step #15: No), a selection process is executed for a region (non-figure region) other than the operation figure assignment region I (step #18). For example, a process for scrolling a map image such that the position at which the touch operation is sensed is centered in the display screen 41 is executed. The input determination process is thus terminated.

When the input determination process is terminated, the process returns to FIG. 10, and it is determined whether or not the image displayed on the display screen 41 is changed (step #06). In the case where no depression operation or touch operation is sensed in the input determination process, a screen transition is not likely to be performed. In such a case (step #06: No), the input determination process is executed again. In the case where the operation figure 44 is selected as a result of the input determination process, a process for scrolling the map image is executed, or the like, meanwhile, a screen transition may be performed. In such a case (step #06: Yes), the operation input reception process is terminated. The processes in step #01 and the subsequent steps are executed again on the display image after the change. The processes described above are repeatedly successively executed.

5. Procedures of Control Process for Operation Surface of Touch Pad of Operation Input Device

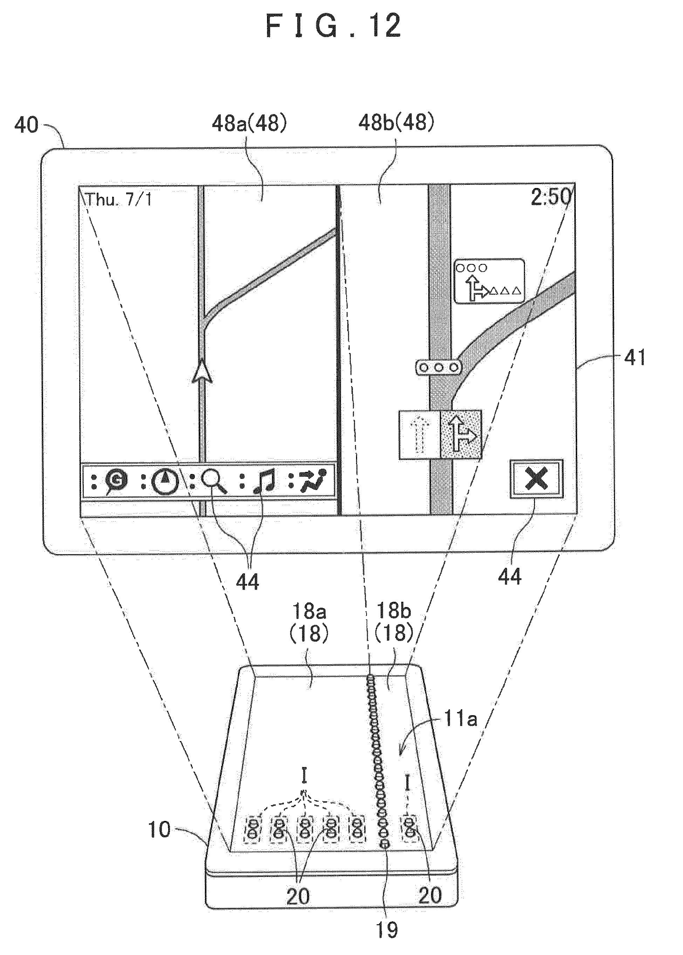

The display screen 41 of the display input device 40 is occasionally divided into a plurality of screen regions 48 as shown in FIG. 12. FIG. 12 shows an example in which a reduced map is displayed in a first screen region 48a on the left side of the drawing and an enlarged map centered on a branch is shown in a second screen region 48b on the right side of the drawing. Besides, a map screen, a television broadcast screen, a screen for displaying a video image from a video disc or the like, an audio setting screen, a schematic view of an expressway, a screen for displaying a schematic view of a route, etc. may be displayed in the different screen regions 48. The number of the screen regions 48 is not limited to two as shown in FIG. 12, and three or more screen regions 48 may be set on the display screen 41.

In the case where the display screen 41 is divided into a plurality of screen regions 48 that display independent images, the protrusion control section 52 divides the operation surface 11a of the touch pad 10 into the number of operation surface regions 18, the number of the operation surface regions 18 being the same as the number of the screen regions 48. That is, the protrusion control section 52 sets a boundary 19 between the operation surface regions 18, and causes the protrusion members 20 to be protruded from the operation surface 11a along the boundary 19. As a result, the boundary 19 formed by the protruded protrusion members 20 makes each operation surface region 18 clearly distinguishable by the user. Thus, the user can clearly recognize an operation surface region 18 corresponding to a particular screen region 48 for which it is desired to input a predetermined operation. In this event, the protrusion control section 52 sets the boundary 19 between the operation surface regions 18 such that the area of each of the operation surface regions 18 corresponds to the display content of the corresponding screen region 48, irrespective of the ratio in area between the plurality of screen regions 48. That is, as one viewpoint, the protrusion control section 52 may set the boundary 19 between the operation surface regions 18 such that the area of each of the operation surface regions 18 corresponds to the number of operation figures 44 in the corresponding screen region 48 (see a first example etc. to be discussed later). As another viewpoint, the protrusion control section 52 may set the area of each of the operation surface regions 18 in accordance with an operation method corresponding to the display content of each of the screen regions 48 and acceptable by the operation surface region 18 corresponding to each screen region 48 (see a second example etc. to be discussed later).

More particularly, after acquiring information on partitioning between the screen regions 48 on the display screen 41 of the display input device 40 from the depiction control section 54, the status determination section 51 determines that the protrusion status of the protrusion members 20 assigned to the boundary 19 is the protruded state. The protrusion control section 52 causes the corresponding protrusion members 20 to be protruded on the basis of the determination results. A plurality of functional sections thus cooperates with each other to set the boundary 19. In the following description, unless otherwise noted, it is assumed that the protrusion control section 52 principally performs control (it may be considered that the operation input computation section 50 principally performs control).

With reference to FIG. 12, for example, while the two screen regions 48 on the display screen 41 have substantially the same area, the two operation surface regions 18 on the operation surface 11a have different areas. The embodiment of the present invention is thus characterized in that the ratio in area between the plurality of screen regions 48 on the display screen 41 and the ratio in area between the plurality of operation surface regions 18 on the operation surface 11a are different from each other. That is, the boundary 19 between the operation surface regions 18 is set irrespective of the ratio in area between the plurality of screen regions 48 (which does not hinder the operation surface regions 18 from having the same area). This allows the operation figures 44 in each screen region 48 to be appropriately distributed in the corresponding operation surface region 18, which enables to detect a predetermined operation performed by the user in each operation surface region 18. That is, the user can perform reliable operation input compared to the related art without closely watching the display screen 41, and an operation input system 3 that enables to perform operation input in a highly convenient manner is provided. A variety of specific examples will be described below.

[First Example]

In a first example shown in FIG. 12, five operation figures 44 are displayed in the first screen region 48a on the left side of the drawing as in FIG. 6. Meanwhile, only one operation figure 44 is displayed in the second screen region 48b on the right side of the drawing. The operation figure 44 indicates an operation of hiding the enlarged map displayed in the second screen region 48b, for example a "hide enlargement" operation. In the case where different numbers of operation figures 44 are contained in the screen regions 48, the protrusion control section 52 sets the boundary 19 between the operation surface regions 18 such that the area of each of the operation surface regions 18 corresponds to the number of operation figures 44 in the corresponding screen region 48, irrespective of the ratio in area between the plurality of screen regions 48. That is, the boundary 19 is set such that the area of a first operation surface region 18a corresponding to the first screen region 48a, which contains five operation figures 44, is larger than the area of the second operation surface region 18b corresponding to the second screen region 48b, which contains only one operation figure 44.

Thus, in one aspect, the protrusion control section 52 sets the boundary 19 such that an operation surface region 18 corresponding to a screen region 48 containing the larger number of operation figures 44 has a larger area, irrespective of the ratio in area between the plurality of screen regions 48. That is, an operation surface region 18 with the larger number of operation figures 44 have a larger area, and thus the operation figures 44 in each screen region 48 are appropriately distributed in the corresponding operation surface region 18. For example, an appropriate gap that is uniform over the entire touch pad 10 may be set between the operation figure assignment regions I corresponding to the operation figures 44 in the operation surface regions 18. This enables the user to perform more reliable operation input.

Preferably, the protrusion control section 52 sets the boundary 19 quantitatively. For example, in one aspect, the protrusion control section 52 may set the area of the operation surface region 18 corresponding to each of the screen regions 48 such that the ratio in area between the operation surface regions 18 matches the ratio in number of operation figures 44 contained in each of the plurality of screen regions 48, irrespective of the ratio in area between the plurality of screen regions 48. For example, the ratio in area between the first operation surface region 18a and the second operation surface region 18b illustrated in FIG. 12 may be set to "5 to 1" in accordance with the number "5" of operation figures 44 contained in the first screen region 48a to the number "1" of operation figures 44 contained in the second screen region 48b. That is, the area of each of the operation surface regions 18 is set such that the ratio in area between the operation surface regions 18 matches the ratio in number of operation figures 44 contained in the screen regions 48, and thus the operation figures 44 in each screen region 48 are further appropriately distributed in the corresponding operation surface region 18. As a result, the operation figure assignment regions I corresponding to the operation figures 44 are disposed uniformly in a well-balanced manner substantially over the entire operation surface 11a. As a result, the user can perform more reliable operation input.

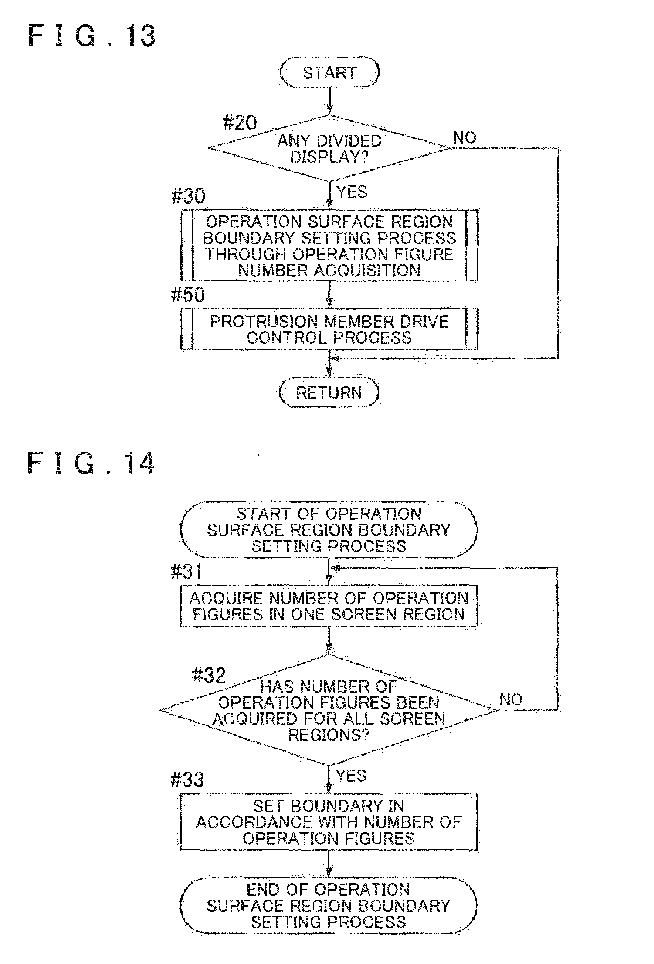

The procedures of setting the operation surface regions 18 and the boundary 19 will be described below with additional reference to the flowcharts of FIGS. 13 to 16. As shown in FIG. 13, after acquiring information on the display screen 41 of the display input device 40 from the depiction control section 54, the protrusion control section 52 determines whether or not display on the display screen 41 is divided (step #20). If display on the display screen 41 is not divided, that is, the display screen 41 is not divided into a plurality of screen regions 48 (step #20: No), it is not necessary to set operation surface regions 18 or a boundary 19. Therefore, the protrusion control section 52 terminates all the processes. On the other hand, in the case where display on the display screen 41 divided, that is, it is determined that the display screen 41 is divided into a plurality of screen regions 48 (step #20: Yes), an operation surface region boundary setting process through operation figure number acquisition (step #30) and a protrusion member drive control process (step #50) are executed.

In the operation surface region boundary setting process through operation figure number acquisition, as shown in FIG. 14, the number of operation figures 44 in one screen region 48 is acquired (step #31). This step is repeatedly executed until the number of operation figures 44 is acquired for all the screen regions 48 (step #32 → step #31). When the number of operation figures 44 is acquired for all the screen regions 48 (step #32: Yes), a boundary 19 is set in accordance with the acquired number of operation figures 44 as discussed above (step #33).

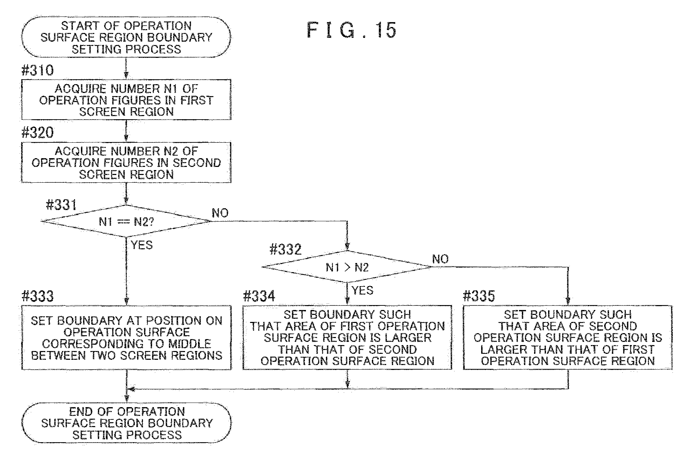

The operation surface region boundary setting process through operation figure number acquisition will be described using a specific example with reference to FIGS. 12 and 15. As shown in FIG. 15, for example, the number N1 (in the example, "5") of operation figures 44 in the first screen region 48a is first acquired (step #310). Next, the number N2 (in the example, "1") of operation figures 44 in the second screen region 48b is acquired (step #320). Next, it is determined whether or not the number N1 of operation figures 44 in the first screen region 48a and the number N2 of operation figures 44 in the second screen region 48b are equal to each other (step #331). In the case there the two numbers are equal to each other, it is not necessary to set any of the respective areas of the operation surface regions 18 corresponding to the first screen region 48a and the second screen region 48b to be preferentially larger. Thus, a boundary 19 that makes the areas of the operation surface regions 18 match those of the screen regions 48 is set. That is, a boundary 19 is set at a position on the operation surface 11a corresponding to the middle between the two screen regions 48 (step #333).

In the case where the numbers N1 and N2 of operation figures 44 are not equal to each other as in the example, on the other hand, the process takes the branch indicated by "No" at step #331, and it is determined which of the numbers N1 and N2 of operation figures 44 is larger (step #332). In the example, the number N1 of operation figures 44 in the first screen region 48a is the larger. Thus, it is determined in step #332 as "true" (step #332: Yes), and the process proceeds to step #334. That is, a boundary 19 is set such that the area of the first operation surface region 18a corresponding to the first screen region 48a is set to be preferentially larger than that of the second operation surface region 18b corresponding to the second screen region 48b. In the case where the number N2 of operation figures 44 in the second screen region 48b is larger, in contrast, a boundary 19 is set such that the area of the second operation surface region 18b corresponding to the second screen region 48b is set to be preferentially larger than that of the first operation surface region 18a corresponding to the first screen region 48a (step #335).

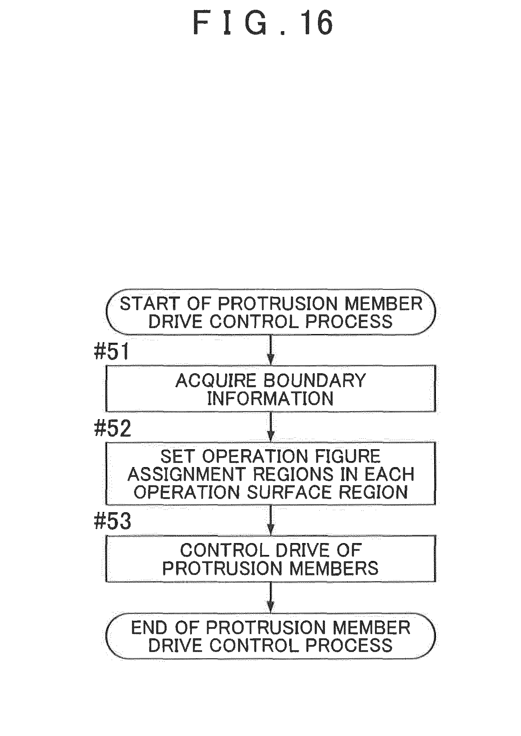

When the boundary 19 is set in the operation surface region boundary setting process through operation figure number acquisition (step #30 of FIG. 13 and FIG. 14) in this way, the protrusion member drive control process (step #50 of FIG. 13 and FIG. 16) is executed next. At the start of the protrusion member drive control process, as shown in FIG. 16, the protrusion control section 52 acquires boundary information which is information on the boundary 19 set in the operation surface region boundary setting process (step #51). Next, in the case where operation figures 44 are contained in the screen regions 48, the protrusion control section 52 sets operation figure assignment regions I in each operation surface region 18 (step #52). Then, the protrusion control section 52 vibrates the piezoelectric element 31 as discussed above with reference to FIGS. 4 and 5 to control drive of the protrusion members 20 corresponding to the boundary 19 and the operation figure assignment regions I to cause the protrusion members 20 to be protruded from the operation surface 11a (step #53).

[Second Example]

In the first example discussed above, the protrusion control section 52 sets the boundary 19 between the operation surface regions 18 such that the area of each of the operation surface regions 18 corresponds to the number of operation figures 44 in the corresponding screen region 48. However, the manner of setting the boundary 19 is not limited to the manner according to the first example. In a second example described below, a boundary between the operation surface regions 18 is set such that the area of each of the operation surface regions 18 corresponds to the display content of the corresponding screen region 48. The display content indicates the characteristics (screen region characteristics) of a screen depicted in each screen region 48 by the depiction control section 54. The screen region characteristics may be the type of a display image such as a map screen, a television broadcast screen, a screen for displaying a video image from a video disc or the like, an audio setting screen, a schematic view of an expressway, a screen for displaying a schematic view of a route, etc.

The screen region characteristics may also be the type of an operation mode in which the user can operate each screen region 48 or an operation surface region 18 corresponding to each screen region 48. Examples of the type of the operation mode include an operation of bringing the object to be sensed D, which has not been in contact with the operation surface 11a, into contact with the operation surface 11a (touch operation), an operation of temporarily moving the object to be sensed D, which has been in contact with the operation surface 11a, away from the operation surface 11a and thereafter bringing the object to be sensed D into contact with the operation surface 11a again (tap operation), and an operation of performing two tap operations within a predetermined time (double-tap operation).

Examples of the type of the operation mode also include an operation of sliding the object to be sensed D with the object to be sensed D in contact with or in proximity to the operation surface 11a (slide operation), and an operation of varying the distance between two objects to be sensed D by causing the objects to be sensed D to move closer to and away from each other with the objects to be sensed in contact with the operation surface 11a (pinch-touch operation). For example, a pinch-touch operation may be performed on a map screen to move the objects to be sensed D away from each other to enlarge a region between the objects to be sensed D, or to move the objects to be sensed D closer to each other to reduce a region between the objects to be sensed D. The type of the display screen and the type of the operation mode may be associated with each other to prescribe the priority of an operation to use the prescribed priority as the screen region characteristics.

As described above, the screen region characteristics may be the type of the operation mode in which the user can operate each screen region 48 or an operation surface region 18 corresponding to each screen region 48. In the case where an image displayed in a screen region 48 is a map image, for example, it may be more convenient if a map can be enlarged/reduced intuitively through a slide operation and a pinch-touch operation, rather than a touch operation performed on an operation figure 44. In other cases, while only a touch operation, not a slide operation or a pinch-touch operation, can be received on the display screen 41 (for example, on a touch panel), a slide operation and a pinch-touch operation may be received on the touch pad 10. Thus, the screen region characteristics are preferably information matching the type of the operation mode including not only an operation mode in which the user can directly operate the screen region 48 but also an operation mode in which the user can operate an operation surface region 18 corresponding to the screen region 48.

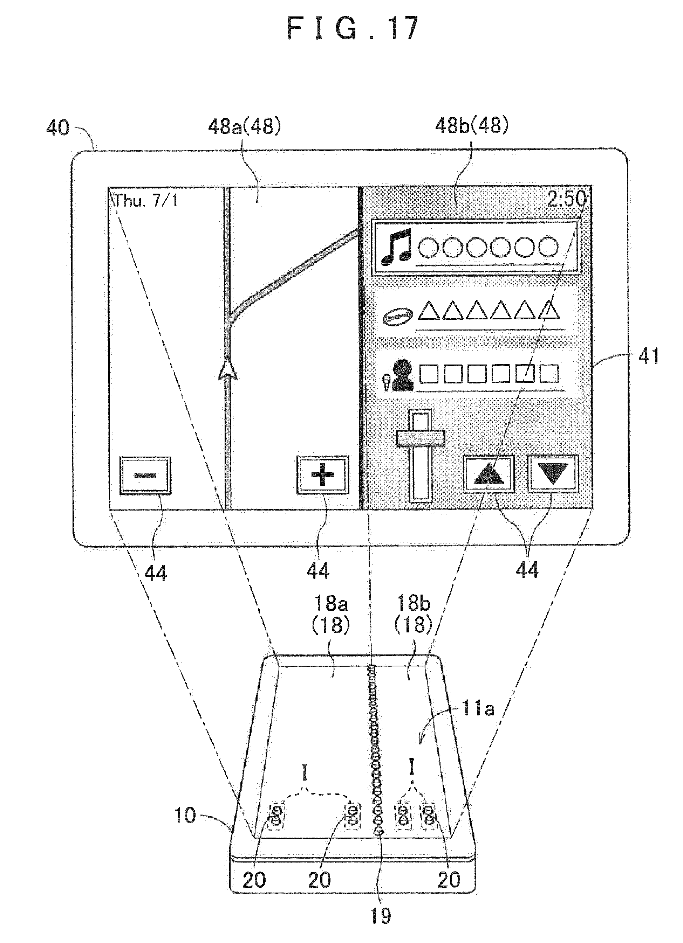

From such a viewpoint, in addition, it is not necessary that an operation figure 44 should be reproduced in an operation surface region 18. For example, even in the case where an operation figure 44 for changing the scale of a map is displayed in a screen region 48 in which the map is displayed, the protrusion members 20 at a position corresponding to the operation figure 44 may not be protruded in an operation surface region 18 corresponding to the screen region 48. For example, the scale of a map may be changed through a touch operation performed on the operation figure 44 in the screen region 48, and may be changed through a pinch-touch operation or a slide operation in the operation surface region 18. A specific example of the second example will be described below with reference to FIG. 17. In the specific example, the operation figures 44 are reproduced in the operation surface regions 18.

In the second example shown in FIG. 17, the first screen region 48a on the left side of the drawing corresponds to a map screen, in which "-" and "+" marks serving as operation figures 44 for changing the scale of the map screen are displayed as operation figures 44 (-: reduction, +: enlargement). The second screen region 48b on the right side of the drawing corresponds to an audio setting screen, in which "upward triangle" and "downward triangle" marks serving as operation figures 44 for volume adjustment are displayed (upward triangle: volume increase, downward triangle: volume decrease). Two operation figures 44 are contained in each of the first screen region 48a and the second screen region 48b. Thus, in the first example, a boundary 19 would be set at a position on the operation surface 11a corresponding to the middle between the two screen regions 48. In the second example, however, a boundary 19 is set such that the area of the first operation surface region 18a corresponding to the first screen region 48a is set to be preferentially larger than that of the second operation surface region 18b corresponding to the second screen region 48b as shown in FIG. 17.

The first screen region 48a corresponds to a map screen, and can be enlarged/reduced through a pinch-touch operation discussed above, besides an operation performed utilizing the operation figures 44 ("-" and "+" marks). In the navigation apparatus 1, the map display function is given priority over the audio setting function. Thus, it is determined on the basis of the display content (screen region characteristics) that the first screen region 48a is given priority over the second screen region 48b in assigning an area on the touch pad 10 for exclusive use. In the second example in which a boundary between the operation surface regions 18 is set such that the area of each of the operation surface regions 18 corresponds to the display content of the corresponding screen region 48, the area of the first operation surface region 18a corresponding to the first screen region 48a is set to be preferentially larger.

What display content of the screen regions 48 is to be given priority may be determined in advance by determining the order (order of priority) in accordance with the type of the display image, characteristics information obtained by combining the type of the display image and the type of the operation mode, or the like, and storing such order in a table or the like. The type of the display image and the type of the operation mode may be converted into numerals to calculate priority through computation to decide the order in accordance with the calculated priority. The ratio in area between the operation surface regions may be decided quantitatively in accordance with the order of priority or the priority.

That is, the protrusion control section 52 sets the boundary 19 between the operation surface regions 18 such that the area of each of the operation surface regions 18 corresponds to the display content (screen region characteristics such as the type of the display image and the type of the operation mode) of the corresponding screen region 48, and causes the protrusion members 20 to be protruded along the boundary 19. As a preferred aspect, as in the display input device 40 according to the embodiment, in the case where the display screen 41 is a touch panel having a function of sensing an object to be sensed D in contact with or in proximity to the display screen 41 to receive input corresponding to the position of the sensed object D, the protrusion control section 52 sets the area of each of the operation surface regions 18 in accordance with an operation method (type of the operation mode) acceptable by each of the screen regions 48 on the display screen 41. The protrusion control section 52 may also set the area of each of the operation surface regions 18 in accordance with an operation method corresponding to each of the screen regions 48 and acceptable by the operation surface region 18 corresponding to each screen region 48, irrespective of whether or not the display screen 41 has a function of sensing an object to be sensed in contact with or in proximity to the display screen 41 to receive input corresponding to the position of the sensed object.

In particular, the protrusion control section 52 preferably sets the area of each of the operation surface regions 18 in accordance with whether or not the operation method acceptable by the screen region 48 or the operation surface region 18 includes a touch operation, or whether or not the operation method includes both a slide operation (in particular, a pinch-touch operation) and a touch operation. A slide operation including a pinch-touch operation, for example, involves operation performed along the operation surface 11a, and thus requires a large area compared to a touch operation and a tap operation which involve operation performed vertically to the operation surface 11a. Thus, setting the area of an operation surface region 18 corresponding to a screen region 48 that receives a slide operation to be larger improves convenience to the user.

In the case where the display screen 41 has a function of sensing an object to be sensed D in contact with or in proximity to the display screen 41 to receive input corresponding to the position of the sensed object D as in the display input device 40, the operation method acceptable by the screen region 48 is acceptable by each of the screen regions 48 on the display screen 41. In addition, the operation method acceptable by the operation surface region 18 is set for each of the operation surface regions 18 corresponding to the screen regions 48 in accordance with each of the screen regions 48, irrespective of whether or not the display screen 41 can accept such operation input, and acceptable by each of the operation surface regions 18 corresponding to the screen regions 48.

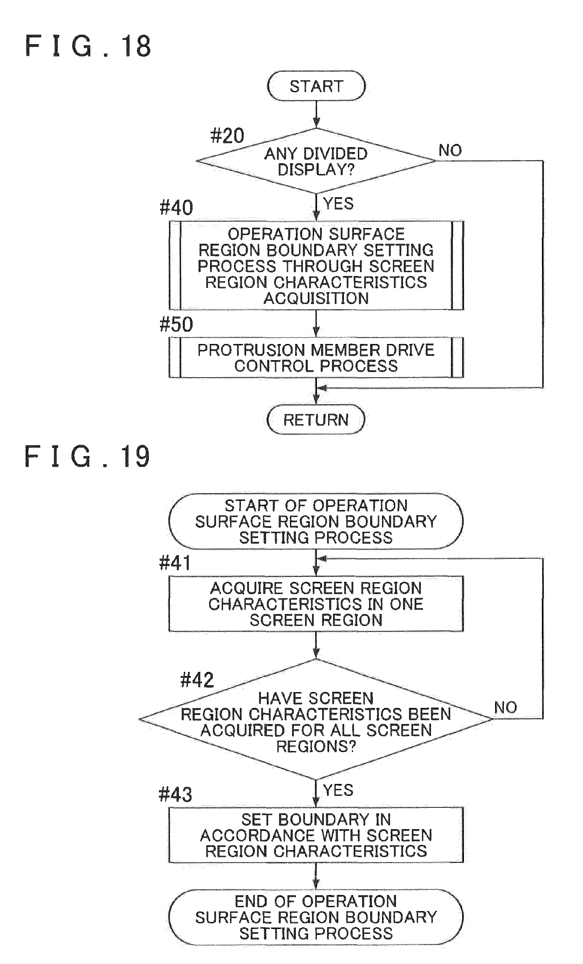

The procedures of setting the operation surface regions 18 and the boundary 19 will be described below with additional reference to the flowcharts of FIGS. 18 to 20. As shown in FIG. 18, after acquiring information on the display screen 41 of the display input device 40 from the depiction control section 54, the protrusion control section 52 determines whether or not display on the display screen 41 is divided (step #20). If display on the display screen 41 is not divided, that is, the display screen 41 is not divided into a plurality of screen regions 48 (step #20: No), it is not necessary to set operation surface regions 18 or a boundary 19. Therefore, the protrusion control section 52 terminates all the processes. On the other hand, in the case where display on the display screen 41 is divided, that is, it is determined that the display screen 41 is divided into a plurality of screen regions 48 (step #20: Yes), an operation surface region boundary setting process through screen region characteristics acquisition to be discussed later (step #40) and a protrusion member drive control process (step #50) are executed.

In the operation surface region boundary setting process through screen region characteristics acquisition, as shown in FIG. 19, the screen region characteristics in one screen region 48 are acquired (step #41). This step is repeatedly executed until the screen region characteristics are acquired for all the screen regions 48 (step #42 → step #41). When the screen region characteristics are acquired for all the screen regions 48 (step #42: Yes), a boundary 19 is set in accordance with the acquired screen region characteristics as discussed above (step #43).

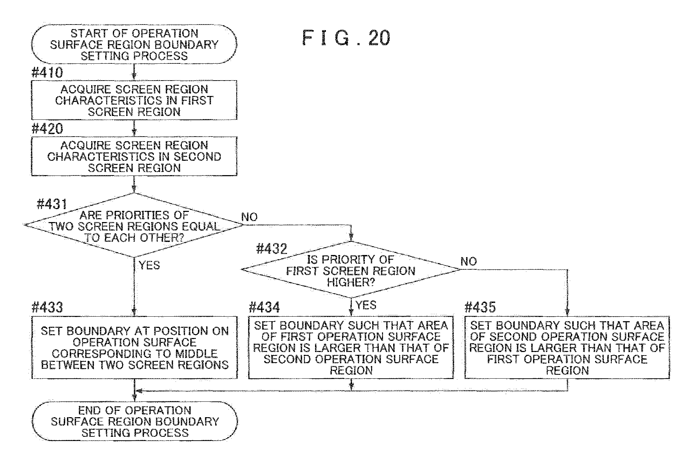

The operation surface region boundary setting process through screen region characteristics acquisition will be described using a specific example with reference to FIGS. 17 and 20. As shown in FIG. 20, for example, the screen region characteristics of the first screen region 48a (indicating that the first screen region 48a is "a map screen that receives a pinch-touch operation") are first acquired (step #410). Next, the screen region characteristics of the second screen region 48b (indicating that the second screen region 48b is "an audio setting screen that receives only a touch operation") is acquired (step #420). It is preferred that the priority should be computed on the basis of the screen region characteristics in steps #410 and #420, for example. In the example, the priority is computed.

Next, it is determined whether or not the priority based on the screen region characteristics of the first screen region 48a and the priority based on the screen region characteristics of the second screen region 48b are equal to each other (step #431). In the case where the two priorities are equal to each other, it is not necessary to set any of the respective areas of the operation surface regions 18 corresponding to the first screen region 48a and the second screen region 48b to be preferentially larger. Thus, a boundary 19 that makes the areas of the operation surface regions 18 match those of the screen regions 48 is set. That is, a boundary 19 is set at a position on the operation surface 11a corresponding to the middle between the two screen regions 48 (step #433).

In the example, the priorities of the screen regions 48a and 48b are not equal to each other with the first screen region 48a given higher priority as discussed above. Thus, the process takes the branch indicated by "No" at step #431, and it is determined which of the screen regions 48a and 48b is given higher priority (step #432). In the case where the priority of the first screen region 48a is higher as in the example, a boundary 19 is set such that the area of the first operation surface region 18a corresponding to the first screen region 48a is set to be preferentially larger than that of the second operation surface region 18b corresponding to the second screen region 48b. (step #434). In the case where the priority of the second screen region 48b is higher, in contrast, a boundary 19 is set such that the of the second operation surface region 18b corresponding to the second screen region 48b is set to be preferentially larger than that of the first operation surface region 18a corresponding to the first screen region 48a (step #435).

When the boundary 19 is set in the operation surface region boundary setting process through screen region characteristics acquisition (step #40 of FIG. 18 and FIG. 19) in this way, the protrusion member drive control process (step #50 of FIG. 18 and FIG. 16) is executed next. At the start of the protrusion member drive control process, as shown in FIG. 16, the protrusion control section 52 acquires boundary information which is information on the boundary 19 set in the operation surface region boundary setting process (step #51). Next, in the case where operation figures 44 are contained in the screen regions 48, the protrusion control section 52 sets operation figure assignment regions I in each operation surface region 18 (step #52). Then, the protrusion control section 52 vibrates the piezoelectric element 31 as discussed above with reference to FIGS. 4 and 5 to control drive of the protrusion members 20 corresponding to the boundary 19 and the operation figure assignment regions I to cause the protrusion members 20 to be protruded from the operation surface 11a (step #53).

[Third Example]

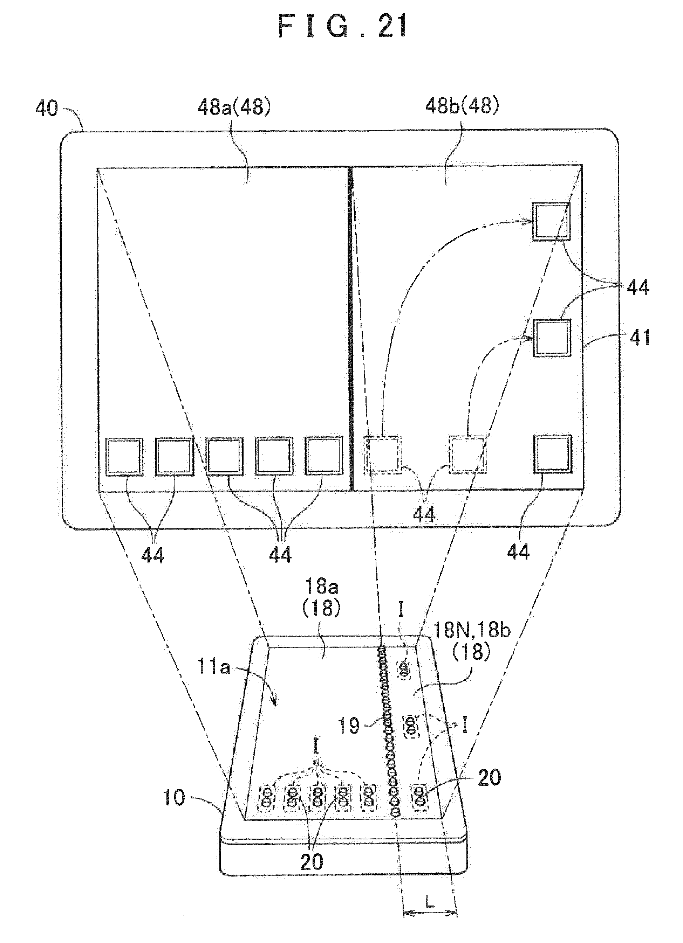

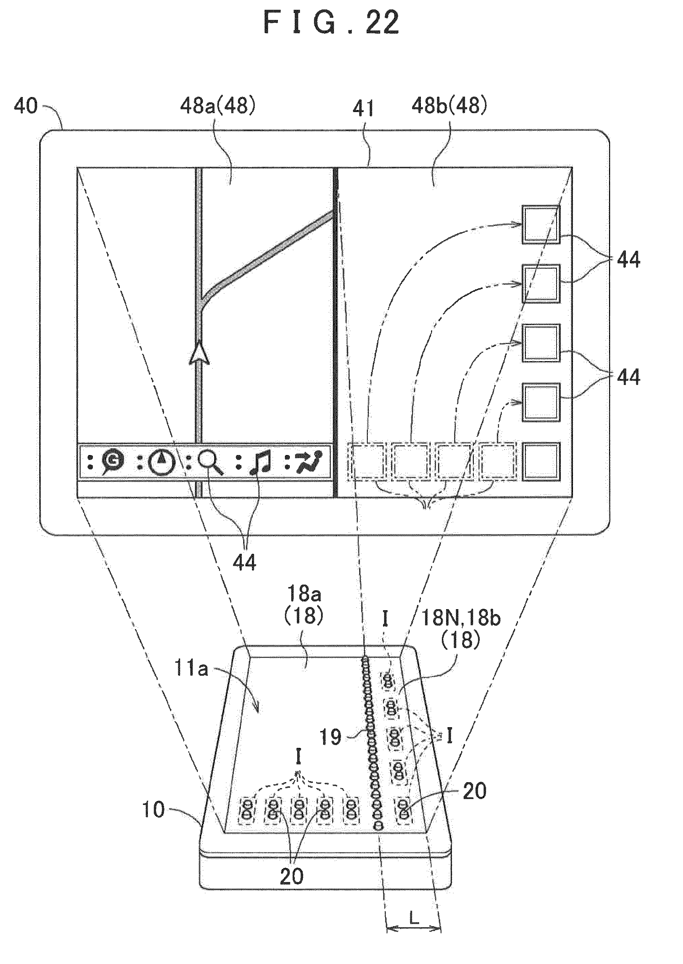

In the first and second examples, the operation surface regions 18 are set irrespective of the ratio in area between the screen regions 48. Therefore, in the case where operation figures 44 are contained in the screen regions 48, operation figure assignment regions I may not be set at sufficient intervals particularly in each operation surface region 18, the ratio in area of which is set to be low compared to the corresponding screen region 48. FIGS. 21 and 22 show such examples. FIG. 21 shows an example corresponding to the first example, in which the area of each of the operation surface regions 18 is set in accordance with the number of operation figures 44 contained in the corresponding region 48. FIG. 22 shows an example corresponding to the second example, in which the area of each of the operation surface regions 18 is set in accordance with the display content of the corresponding screen region 48. As shown in FIGS. 21 and 22, the operation figures 44, which are disposed in the horizontal direction of the drawing in the second screen region 48b and are indicated by the broken line, are disposed in the vertical direction of the drawing in the second operation surface region 18b. This is because the second operation surface region 18b is a narrow operation surface region 18N with the boundary 19 set within a predetermined distance (M) from the outer periphery of the operation surface 11a, and it is difficult to dispose the operation figures 44 in the horizontal direction of the drawing in the second operation surface region 18b, the number of the operation figures 44 in the second operation surface region 18b being the same as the number of the operation figures 44 in the second screen region 48b.

If the direction of arrangement of the operation figures 44 displayed in the second screen region 48b and the direction of arrangement of the operation figure assignment regions I set in the second operation surface region 18b are different from each other, it may be difficult for the user to perform accurate operation input to the touch pad 10. Thus, the depiction control section 54 disposes (rearranges) the plurality of operation figures 44 in the screen region 48 corresponding to the narrow operation surface region 18N such that the arrangement of the operation figures 44 corresponds to the arrangement of the protrusion members 20 established by the protrusion control section 52 as indicated by the solid line in FIGS. 21 and 22.

That is, in the case where the boundary 19 is set within a predetermined distance (M) from the outer periphery of the operation surface 11a and a plurality of operation figures 44 are provided in a screen region 48 corresponding to the narrow operation surface region 18N which is an operation surface region 18 set between the boundary 19 and the outer periphery, the protrusion control section 52 disposes the protrusion members 20 protruded from the operation surface 11a in correspondence with the plurality of operation figures 44 in the narrow operation surface region 18N so as to be in parallel with the boundary 19. Thus, the depiction control section 54 disposes (rearranges) the plurality of operation figures 44 in the screen region 48 corresponding to the narrow operation surface region 18N such that the arrangement of the operation figures 44 corresponds to the arrangement of the protrusion members 20 (operation figure assignment regions I) established by the protrusion control section 52.

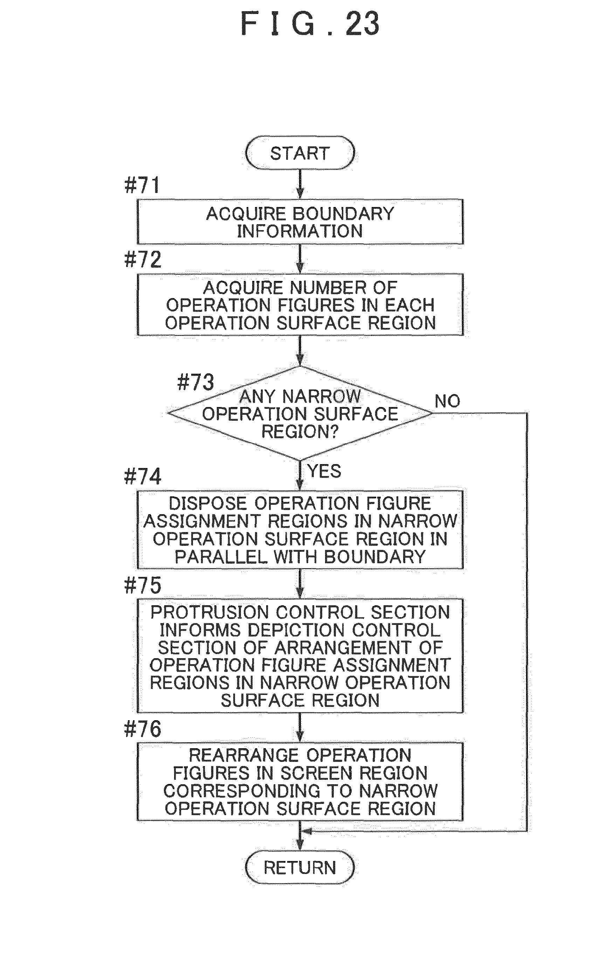

As shown in FIG. 23, the protrusion control section 52 first acquires boundary information indicating positional information on the boundary 19 (step #71). Next, the protrusion control section 52 acquires the number of operation figures 44 contained in the screen regions 48 corresponding to each operation surface region 18 (step #72). In this event, the protrusion control section 52 may acquire the number of operation figure assignment regions I contained in each operation surface region 18. Next, it is determined on the basis of the boundary information and the number of operation figure assignment regions I (operation figures 44) whether or not each operation surface region 18 is a narrow operation surface region 18N. That is, it is determined whether or not there is any narrow operation surface region 18N (step #73). For example, if the number of operation figure assignment regions I (operation figures 44) contained in an operation surface region 18 with the boundary 19 set in the vicinity of the outer periphery of the operation surface 11a is "1" or "0", and the "1" or "0" operation figure assignment region I (operation figure 44) can be disposed sufficiently in the operation surface region 18, such an operation surface region 18 is not a narrow operation surface region 18N. That is, the predetermined distance (M) from the outer periphery of the operation surface 11a is preferably a value (variable value) that varies in accordance with the number of operation figure assignment regions I (operation figures 44), rather than a fixed value.

In one aspect, the predetermined distance (M) is preferably set on the basis of the number of operation figures 44 contained in the screen region 48 (or the number of operation figure assignment regions I contained in the operation surface region 18). For example, the predetermined distance (M) may be defined as a function f of N by the following formula:

$$M = f(N)$$

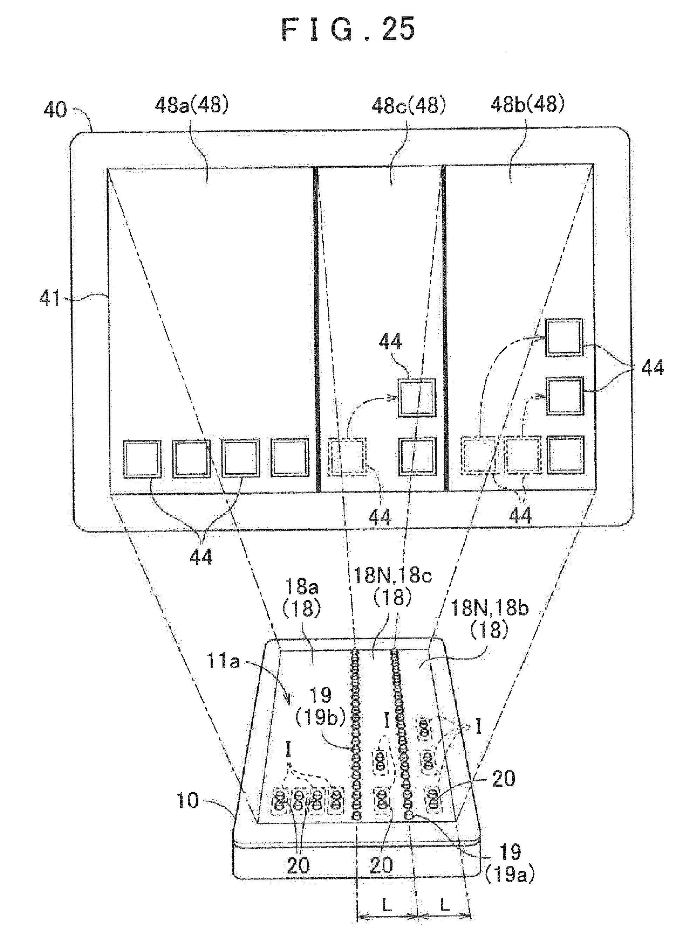

Then, it is preferably determined whether or not the operation surface region 18 is a narrow operation surface region 18N on the basis of the calculated predetermined distance (M) and the actual distance L between the outer periphery of the operation surface 11a and the boundary 19 (or the actual distance L between adjacent boundaries 19 illustrated in FIG. 25).

If it is determined in step #73 that there is any narrow operation surface region 18N, the protrusion control section 52 disposes the operation figure assignment regions I (operation figures 44) in the narrow operation surface region 18N in parallel with the boundary 19 (step #74). Then, the protrusion control section 52 informs the depiction control section 54 that the operation figure assignment regions I in the narrow operation surface region 18N have been set in an arrangement different from the arrangement of the operation figures 44 in the screen region 48 corresponding to the narrow operation surface region 18N (step #75). The depiction control section 54 rearranges the operation figures 44 in the screen region 48 corresponding to the narrow operation surface region 18N in accordance with the arrangement of the operation figure assignment regions I in the narrow operation surface region 18N (step #76).

The arrangement of the operation ffigures 44 in the screen region 48 is changed in accordance with the arrangement of the operation figure assignment regions I in the operation surface region 18 to make the arrangement of the operation figures 44 in the screen region 48 and the arrangement of the regions corresponding to the operation figures 44 in the operation surface region 18 common. As a result, the user can easily correlate the operation figures 44 in the screen region 48 with the regions corresponding to the operation figures 44 in the screen region 48, which the user to perform more reliable operation input.

In the embodiment, two hole portions 12 are arranged along the Y direction of the operation surface 11a as the hole portions 12 through which the protrusion members 20 provided in an operation figure assignment region I corresponding to one operation figure 44 are advanced and retracted (see FIG. 4 etc). In a modified embodiment, however, two hole portions 12 may be arranged along the X direction of the operation surface 11a as the direction of arrangement of the operation figure assignment regions I (operation figures 44) in the narrow operation surface region 18N is changed by 90° when they are disposed in parallel with the boundary 19.

[Fourth Example]

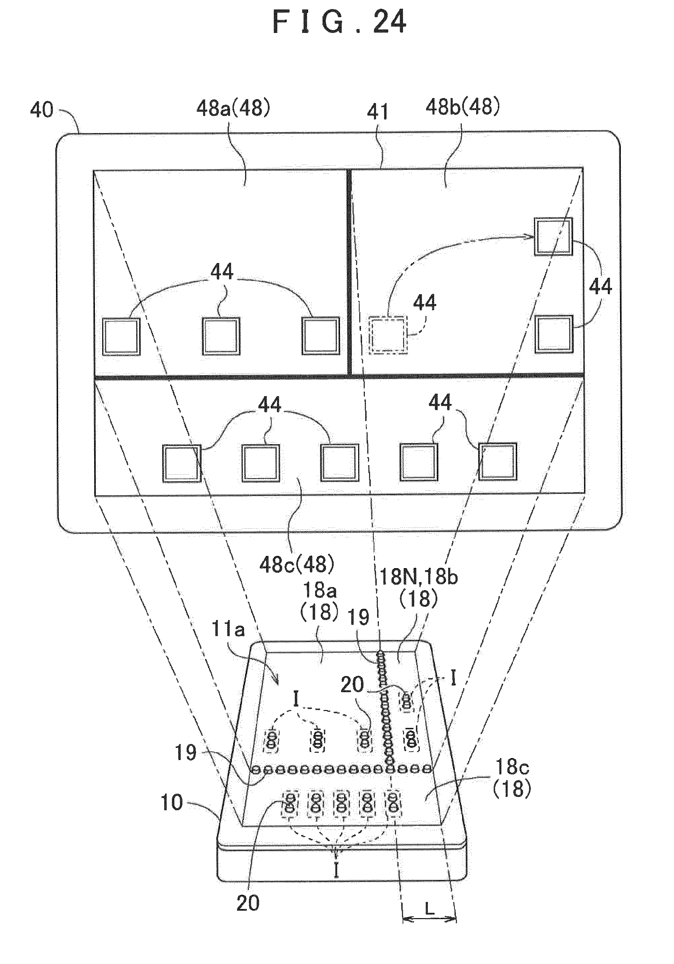

In the first to third examples discussed above, the display screen 41 is configured to have two screen regions 48. However, the display screen 41 ay be configured to have three or more screen regions 48 as shown in FIGS. 24 and 25. In the first to third examples discussed above, the display screen 41 is divided in the horizontal direction of the drawing. However, it is a matter of course that the display screen 41 may be divided in the vertical direction. In the case where three or more screen regions 48 are provided, the display screen 41 may be divided in both the horizontal direction and the vertical direction as shown in FIG. 24. In this event, each operation surface region 18 is set to an appropriate area through a combination of the first to third examples discussed above. FIG. 24 shows an example in which the second operation surface region 18b is determined as the narrow operation surface region 18N.

[Fifth Example]

In the third example discussed above, the boundary 19 is set within a predetermined distance (M) from the outer periphery of the operation surface 11a, and a plurality of operation figures 44 are provided in a region 48 corresponding to the narrow operation surface region 18N which is an operation surface region 18 set between the boundary 19 and the outer periphery. That is, the narrow operation surface region 18N faces the outer periphery of the operation surface 11a. However, the narrow operation surface region 18N docs not necessarily face the outer periphery of the operation surface 11a. For example, as shown in FIG. 25, an operation surface region 18 (third operation surface region 18c) set between a boundary 19 (first boundary 19a) and another boundary 19 (second boundary 19b) may be set as the narrow operation surface region 18N. In the example of FIG. 25, both the second operation surface region 18b set between a boundary 19 (first boundary 19a) and the outer periphery and the third operation surface region 18c set between a boundary 19 (first boundary 19a) and another boundary 19 (second boundary 19b) is set as the narrow operation region 18N.

## 6. Other Embodiments

Lastly, operation input systems according to other embodiments of the present invention will be described. A configuration disclosed in each of the following embodiments may be applied in combination with a configuration disclosed in any other embodiment unless any contradiction occurs.

(1) In the embodiment described above, the protrusion members 20 are protruded in the operation figure assignment regions I. However, in the case where an image displayed in a screen region 48 is a map image, for example, it may be more convenient if a map can be enlarged/reduced through a slide operation and a pinch-touch operation, not a touch operation performed on an operation figure 44. That is, it may be highly convenient if it is possible to enlarge/reduce a map, in no reliance on the operation figures 44, by the user by simply performing a slide operation or a pinch-touch operation on the touch pad 10. Thus, even in the case where an operation figure 44 is displayed in a screen region 48, it is not necessary that protrusion members 20 should be protruded at a position corresponding to the operation figure 44 in an operation surface region 18 corresponding to the screen region 48. That is, in one preferred embodiment of the present invention, the area of an operation surface region 18 may be set in accordance with the display content of a screen region 48 and a boundary 19 may be set without causing protrusion members 20 to be protruded in operation figure assignment regions I.

(2) In the embodiment described above, the drive mechanism 30 brings the protrusion member 20 into one of the protruded state and the retracted state. However, embodiments of the present invention are not limited thereto. That is, the drive mechanism 30 may be configured to bring the protrusion member 20 into an intermediate state between the protruded state and the retracted state. In this case, the protrusion control section 52 may be configured to control stepwise the position of the protrusion member 20 with respect to the operation surface 11a in the protrusion direction (advancing/retracting operation direction Z) so that the protrusion member 20 can be protruded stepwise.

(3) In the embodiment described above, the drive mechanism 30 includes the piezoelectric element 31, the slide mechanism 32, and the protrusion control section 52. However, embodiments of the present invention are not limited thereto. That is, the drive mechanism 30 may have any specific configuration as long as the drive mechanism 30 can cause advancing/retracting operation of the protrusion member 20 along the advancing/retracting operation direction Z to move the protrusion member 20 between the protruded state and the retracted state. For example, the drive mechanism 30 may utilize a fluid pressure such as a liquid pressure or a gas pressure, or may utilize an electromagnetic force of an electromagnet or the like.

(4) In the embodiment described above, the protrusion member 20 is driven so as to be advanced and retracted along the advancing/retracting operation direction Z set to a direction orthogonally intersecting the operation surface 11a. However, embodiments of the present invention are not limited thereto. That is, the advancing/retracting operation direction Z may be set to a direction inclined with respect to, rather than orthogonally intersecting, the operation surface 11a. In this case, in the case where the touch pad 10 is disposed generally horizontally at the center console portion as in the embodiment described above, for example, the advancing/retracting operation direction Z is preferably set to be inclined toward a driver's seat.

(5) In the embodiment described above, the touch pad 10 of the capacitance type which can sense the object to be sensed D in contact with or in proximity to the operation surface 11a is used. However, embodiments of the present invention are not limited thereto. That is, the touch pad 10 of the resistance film type may also be utilized in place of the touch pad 10 of the capacitance type. Alternatively, the touch pad 10 of a pressure sensitive type which can sense the object to be sensed D in contact with the operation surface 11a may also be utilized.

(6) In the embodiment described above, the operation figure 44 being displayed is expressed by a pair of (two) protrusion members 20 in the form of two protrusion portions arranged side by side. However, embodiments of the present invention are not limited thereto. That is, the operation figure 44 may be simply expressed by one protrusion member 20 in the form of a single protrusion portion. Alternatively, the operation figure 44 may be expressed by three or more protrusion members 20 in the form of a group of protrusion portions that assumes a predetermined shape as a whole.

(7) In the embodiment described above, the protrusion state sensing section 56 is configured to sense the actual protrusion status of each protrusion member 20 on the basis of information acquired from a position sensor. However, embodiments of the present invention are not limited thereto. For example, the protrusion state sensing section 56 may be formed using the piezoelectric element 31 provided in the drive mechanism 30 as a sensor element, by utilizing the characteristics of the piezoelectric element 31. As discussed above, when the protrusion control section 52 drives the protrusion member 20 so as to be advanced and retracted, application of a voltage is stopped after a predetermined time elapses. Therefore, providing a configuration that enables to sense an external force (a depressing force provided by the user) applied to the piezoelectric element 31 via the protrusion member 20 and the coupling member 33 as an electric signal after the stop of the voltage application may achieve a configuration that enables to sense an operation (depression operation) for the protrusion member 20 performed by the user. Then, the protrusion state sensing section 56 may sense the actual protrusion status of each protrusion member 20 on the basis of the sensed depression operation and the protrusion status of each protrusion member 20 determined by the status determination section 51. That is, in the case where an electric signal from the piezoelectric element 31 corresponding to the protrusion member 20 in the protruded state is sensed, the protrusion state sensing section 56 determines that the protrusion member 20 has been brought into the retracted state. Meanwhile, in the case where a lapse of the predetermined time is detected by a timer or the like after the piezoelectric element 31 corresponding to the protrusion member 20 in the retracted state is vibrated, the protrusion state sensing section 56 determines that the protrusion member 20 has been brought into the protruded state.

(8) In the embodiment described above, the operation input computation section 50 includes the functional sections 51 to 57. However, embodiments of the present invention are not limited thereto. That is, the assignment of the functional sections described in relation to the embodiment described above is merely illustrative, and a plurality of functional sections may be combined with each other, or a single functional section may be further divided into sub-sections.

(9) In the embodiment described above, the operation input device 4 allows to perform operation input to the in-vehicle navigation apparatus 1. However, embodiments of the present invention are not limited thereto. That is, the operation input device according to the present invention may allow to perform operation input to a navigation system in which the components of the navigation apparatus 1 described in the embodiment described above are distributed to a server device and an in-vehicle terminal device, a laptop personal computer, a gaming device, and other systems and devices such as control devices for various machines, for example.

(10) Also regarding other configurations, the embodiment disclosed herein is illustrative in all respects, and the present invention is not limited thereto. That is, the scope of the present invention is defined in the appended claims.

The present invention may be suitably applied to an operation input system including a touch pad serving as a pointing device.

**Claims**

1. An operation input system (3) comprising:

   a touch pad (10) that includes an operation plate, on a surface of which an operation surface (11a) is formed, and senses an object to be sensed (D) in contact with or in proximity to the operation surface (11a) to receive input corresponding to a position of the sensed object (D);
   a plurality of protrusion members (20) arranged in accordance with a predetermined rule along the operation surface (11a) and distal end portions of which can penetrate through the operation plate to protrude from the operation surface (11a);
   a protrusion control section (52) that is configured to control a position of the protrusion member (20) with respect to the operation surface (11a) in a protrusion direction; and
   a display device (40) provided separately from the touch pad (10), the display device (40) including a display screen (41) and being configured to display an image on the display screen (41), wherein
   in the case where the display screen (41) is divided into a plurality of screen regions (48) that display independent images, the protrusion control section (52) is configured to divide the operation surface (11a) into a plurality of operation surface regions (18) corresponding to respective ones of the plurality of screen regions (48), the number of the operation surface regions (18) being the same as the number of the screen regions (48), to set a boundary (19) between the operation surface regions (18) such that an area of each of the operation surface regions (18) corresponds to a display content of the corresponding screen region (48), irrespective of a ratio in area between the plurality of screen regions (48), and to cause the protrusion members (20) to be protruded along the boundary (19).

2. The operation input system (3) according to claim 1, wherein
   in the case where a particular operation figure (44) is displayed in at least one of the screen regions (48), the protrusion control section (52) is configured to set the boundary (19) between the operation surface regions (18) such that the area of each of the operation surface regions (18) corresponds to the number of the operation figures (44) provided in the corresponding screen region (48).

3. The operation input system (3) according to claim 2, wherein
   the protrusion control section (52) is configured to set the boundary (19) such that the operation surface region (18) corresponding to the screen region (48) containing the larger number of the operation figures (44) has a larger area.

**4.** The operation input system (3) according to claim 2 or 3, wherein
the protrusion control section (52) is configured to set the area of the operation surface region (18) corresponding to each of the plurality of screen regions (48) such that a ratio in area between the operation surface regions (18) matches a ratio in number of the operation figures (44) contained in each of the screen regions (48).

**5.** The operation input system (3) according to claim 1, wherein
the protrusion control section (52) is configured to set the of each of the operation surface regions (18) in accordance with an operation method corresponding to the display content of each of the screen regions (48) and acceptable by the operation surface region (18) corresponding to each screen region (48).

**6.** The operation input system (3) according to claim 1 or 5, wherein
the protrusion control section (52) is configured to set the area of each of the operation surface regions (18) in accordance with whether or not the operation method corresponding to the display content of each of the regions (48) and acceptable by the operation surface region (18) corresponding to each screen region (48) includes a touch operation in which the object to be sensed (D) is brought into contact with or into proximity to the operation surface region (18), or whether or not the operation method includes both a slide operation in which the object to be sensed (D) is slid with the object to be sensed (D) in contact with or in proximity to the operation surface region (18) and the touch operation.

**7.** The operation input system according to any of claim 1, 5 and 6, wherein:

the display screen (41) has a function of sensing an object to be sensed (D) in contact with or in proximity to the display screen (41) to receive input corresponding to a position of the sensed object (D); and
the protrusion control section (52) is configured to set the area of each of the operation surface regions (18) in accordance with an operation method corresponding to the display content of each of the screen regions (48) on the display screen (41) and acceptable by the screen region (48).

**8.** The operation input system (3) according to any of claims 1 and 5 to 7, wherein:

the display screen (41) has a function of sensing an object to be sensed (D) in contact with or in proximity to the display screen (41) to receive input corresponding to a position of the sensed object (D); and
the protrusion control section (52) is configured to set the area of each of the operation surface regions (18) in accordance with whether or not the operation method corresponding to the display content of each of the screen regions (48) on the display screen (41) and acceptable by the screen region (48) includes a touch operation in which the object to be sensed (D) is brought into contact with or into proximity to the screen region (48), or whether or not the operation method includes both a slide operation in which the object to be sensed (D) is slid with the object to be sensed (D) in contact with or in proximity to the screen region (48) and the touch operation.

**9.** The operation input system (3) according to any of claims 1 to 8, wherein
in the case where a particular operation figure (44) is displayed on the display screen (41), the protrusion control section (52) is configured to cause the protrusion members (20) provided in the operation surface region (18) corresponding to each of the plurality of screen regions (48) to be protruded from the operation surface (11a) such that an arrangement of the protruded protrusion members (20) corresponds to an arrangement of the operation figures (44) in each of the screen regions (48).

**10.** The operation input system (3) according to any of claims 1 to 9, further comprising:

a depiction control section (54) that is configured to control depiction of the image to be displayed on the display screen (41), wherein
in the case where a particular operation figure (44) is displayed on the display screen (41), the boundary (19) is set within a predetermined distance from an outer periphery of the operation surface (11a) or from another boundary, and a plurality of the operation figures (44) are provided in the screen region (48) corresponding to a narrow operation surface region (18) which is the operation surface region (18) set between the boundary (19) and the outer periphery or between the boundary (19) and the other boundary,
the protrusion control section (52) is configured to dispose the protrusion members (20) provided in the narrow operation surface region (18) and protruded from the operation surface (11a) in correspondence with the plurality of operation figures (44) so as to be in parallel with the boundary (19), and
the depiction control section is configured to dispose the plurality of operation figures (44) in the screen region

(48) corresponding to the narrow operation surface region such that an arrangement of the operation figures (44) corresponds to an arrangement of the protrusion members (20) established by the protrusion control section (52).

# F I G . 1

# F I G . 2

81 — GPS RECEIVER

82 — ORIENTATION SENSOR

83 — DISTANCE SENSOR

1

6 — CONTROL COMPUTATION SECTION

50 — OPERATION INPUT COMPUTATION SECTION

70 — NAVIGATION COMPUTATION SECTION

85 — MAP DATABASE

DISPLAY INPUT DEVICE — 40

TOUCH PAD — 10

SOUND INPUT DEVICE — 87

SOUND OUTPUT DEVICE — 88

# F I G . 3

3

50

40 — DISPLAY INPUT DEVICE

54 — DEPICTION CONTROL SECTION

55 — SELECT OPERATION DETERMINATION SECTION

57 — INPUT RECEPTION SECTION

4

10 — TOUCH PAD

20 — PROTRUSION MEMBER

30 — DRIVE MECHANISM

53 — POSITION SENSING SECTION

56 — PROTRUSION STATE SENSING SECTION

52 — PROTRUSION CONTROL SECTION

51 — STATUS DETERMINATION SECTION

# FIG.4

# FIG.5

# FIG.6

Thu. 7/1     2:50

40

41

R

44

45

11a

20

10

D

# F I G . 7

40

Thu. 7/1                    2:50

41

44

44

R

45

11a

20

10

D

# FIG.8

# FIG.9

# FIG.10

```
                    ┌─────────────┐
                    │    START    │
                    └─────────────┘
                          │
#01                       ▼
      ┌─────────────────────────────────────┐
      │         PERFORM VARIOUS             │
      │      PREPERATORY PROCESSES          │
      └─────────────────────────────────────┘
#02                       │
                          ▼
      ┌─────────────────────────────────────┐
      │        CREATE DISPLAY IMAGE         │
      └─────────────────────────────────────┘
#03                       │
                          ▼
      ┌─────────────────────────────────────┐
      │   DETERMINE PROTRUSION STATUS       │
      │   OF EACH PROTRUSION MEMBER         │
      └─────────────────────────────────────┘
#04                       │
                          ▼
      ┌─────────────────────────────────────┐
      │        DISPLAY IMAGE, AND           │
      │     CONTROL DRIVE OF EACH           │
      │       PROTRUSION MEMBER             │
      └─────────────────────────────────────┘
#05                       │◄──────────────────┐
      ┌─┬─────────────────────────────────┬─┐ │
      │ │     INPUT DETERMINATION         │ │ │
      │ │        PROCESS                  │ │ │
      └─┴─────────────────────────────────┴─┘ │
                          │                    │
       #06                ▼                    │
              ╱───────────────────╲    NO      │
             ╱    ANY SCREEN        ╲──────────┘
             ╲    TRANSITION?       ╱
              ╲───────────────────╱
                          │ YES
                          ▼
                    ┌─────────────┐
                    │   RETURN    │
                    └─────────────┘
```

# FIG.11

# F I G . 12

F I G . 13

START

#20 ANY DIVIDED DISPLAY? → NO

#30 YES

OPERATION SURFACE REGION
BOUNDARY SETTING PROCESS
THROUGH OPERATION FIGURE
NUMBER ACQUISITION

#50

PROTRUSION MEMBER DRIVE
CONTROL PROCESS

RETURN

F I G . 14

START OF OPERATION
SURFACE REGION BOUNDARY
SETTING PROCESS

#31

ACQUIRE NUMBER OF OPERATION
FIGURES IN ONE SCREEN REGION

#32 HAS NUMBER OF
OPERATION FIGURES BEEN
ACQUIRED FOR ALL SCREEN
REGIONS? → NO

#33 YES

SET BOUNDARY IN
ACCORDANCE WITH NUMBER OF
OPERATION FIGURES

END OF OPERATION
SURFACE REGION BOUNDARY
SETTING PROCESS

FIG.15

START OF OPERATION
SURFACE REGION BOUNDARY
SETTING PROCESS

#310

ACQUIRE NUMBER N1 OF
OPERATION FIGURES IN FIRST
SCREEN REGION

#320

ACQUIRE NUMBER N2 OF
OPERATION FIGURES IN SECOND
SCREEN REGION

#331

N1 == N2?    NO

YES

#332

N1 > N2    NO

YES

#333

SET BOUNDARY AT POSITION ON
OPERATION SURFACE
CORRESPONDING TO MIDDLE
BETWEEN TWO SCREEN REGIONS

#334

SET BOUNDARY SUCH
THAT AREA OF FIRST OPERATION
SURFACE REGION IS LARGER
THAN THAT OF SECOND
OPERATION SURFACE REGION

#335

SET BOUNDARY SUCH
THAT AREA OF SECOND
OPERATION SURFACE REGION IS
LARGER THAN THAT OF FIRST
OPERATION SURFACE REGION

END OF OPERATION
SURFACE REGION BOUNDARY
SETTING PROCESS

# FIG.16

```
┌─────────────────────────────────┐
│  START OF PROTRUSION MEMBER      │
│    DRIVE CONTROL PROCESS         │
└─────────────────────────────────┘
              │
#51           ▼
┌─────────────────────────────────┐
│       ACQUIRE BOUNDARY           │
│         INFORMATION              │
└─────────────────────────────────┘
              │
#52           ▼
┌─────────────────────────────────┐
│      SET OPERATION FIGURE        │
│   ASSIGNMENT REGIONS IN EACH     │
│   OPERATION SURFACE REGION       │
└─────────────────────────────────┘
              │
#53           ▼
┌─────────────────────────────────┐
│       CONTROL DRIVE OF           │
│      PROTRUSION MEMBERS          │
└─────────────────────────────────┘
              │
              ▼
┌─────────────────────────────────┐
│   END OF PROTRUSION MEMBER       │
│     DRIVE CONTROL PROCESS        │
└─────────────────────────────────┘
```

# F I G . 17

FIG. 18

```
                    ┌──────────┐
                    │  START   │
                    └──────────┘
                         │
                         ▼
   #20          ╱─────────────────╲           NO
         ◄─────╱   ANY DIVIDED      ╲──────────────┐
               ╲    DISPLAY?        ╱               │
                ╲─────────────────╱                │
                         │ YES                     │
   #40                   ▼                         │
        ┌─────────────────────────────────┐        │
        │      OPERATION SURFACE           │        │
        │   REGION BOUNDARY SETTING        │        │
        │   PROCESS THROUGH SCREEN         │        │
        │   REGION CHARACTERISTICS         │        │
        │        ACQUISITION               │        │
        └─────────────────────────────────┘        │
   #50                   │                         │
        ┌─────────────────────────────────┐        │
        │  PROTRUSION MEMBER DRIVE         │        │
        │     CONTROL PROCESS             │        │
        └─────────────────────────────────┘        │
                         │  ◄──────────────────────┘
                         ▼
                    ┌──────────┐
                    │  RETURN  │
                    └──────────┘
```

FIG. 19

```
              ┌─────────────────────────────┐
              │    START OF OPERATION        │
              │ SURFACE REGION BOUNDARY      │
              │    SETTING PROCESS           │
              └─────────────────────────────┘
   #41                    │           ◄──────────────┐
        ┌─────────────────────────────┐              │
        │   ACQUIRE SCREEN REGION      │              │
        │  CHARACTERISTICS IN ONE      │              │
        │     SCREEN REGION            │              │
        └─────────────────────────────┘              │
                         │                            │
   #42                   ▼                            │
              ╱───────────────────────╲      NO       │
        ◄────╱      HAVE SCREEN         ╲─────────────┘
             ╲ REGION CHARACTERISTICS BEEN ╱
             ╲ ACQUIRED FOR ALL SCREEN   ╱
              ╲      REGIONS?          ╱
                ╲───────────────────╱
                         │ YES
   #43                   ▼
        ┌─────────────────────────────┐
        │     SET BOUNDARY IN          │
        │  ACCORDANCE WITH SCREEN      │
        │  REGION CHARACTERISTICS      │
        └─────────────────────────────┘
                         │
                         ▼
              ┌─────────────────────────────┐
              │     END OF OPERATION         │
              │ SURFACE REGION BOUNDARY      │
              │    SETTING PROCESS           │
              └─────────────────────────────┘
```

FIG.20

START OF OPERATION
SURFACE REGION BOUNDARY
SETTING PROCESS

#410
ACQUIRE SCREEN REGION
CHARACTERISTICS IN FIRST
SCREEN REGION

#420
ACQUIRE SCREEN REGION
CHARACTERISTICS IN SECOND
SCREEN REGION

#431
ARE PRIORITIES OF
TWO SCREEN REGIONS EQUAL
TO EACH OTHER?

NO

#432
IS PRIORITY OF
FIRST SCREEN REGION
HIGHER?

NO

YES

YES

#433
SET BOUNDARY AT POSITION ON
OPERATION SURFACE
CORRESPONDING TO MIDDLE
BETWEEN TWO SCREEN REGIONS

#434
SET BOUNDARY SUCH THAT AREA
OF FIRST OPERATION SURFACE
REGION IS LARGER THAN THAT OF
SECOND OPERATION SURFACE
REGION

#435
SET BOUNDARY SUCH THAT AREA
OF SECOND OPERATION SURFACE
REGION IS LARGER THAN THAT OF
FIRST OPERATION SURFACE
REGION

END OF OPERATION
SURFACE REGION BOUNDARY
SETTING PROCESS

# FIG.21

# FIG.22

EP 2 618 238 A1

# F I G . 23

START

#71
ACQUIRE BOUNDARY
INFORMATION

#72
ACQUIRE NUMBER OF
OPERATION FIGURES IN EACH
OPERATION SURFACE REGION

#73 ANY NARROW
OPERATION SURFACE
REGION? — NO

#74 YES
DISPOSE OPERATION FIGURE
ASSIGNMENT REGIONS IN NARROW
OPERATION SURFACE REGION IN
PARALLEL WITH BOUNDARY

#75
PROTRUSION CONTROL SECTION
INFORMS DEPICTION CONTROL
SECTION OF ARRANGEMENT OF
OPERATION FIGURE ASSIGNMENT
REGIONS IN NARROW OPERATION
SURFACE REGION

#76
REARRANGE OPERATION
FIGURES IN SCREEN REGION
CORRESPONDING TO NARROW
OPERATION SURFACE REGION

RETURN

# F I G . 24

# FIG.25

Europäisches
Patentamt

European
Patent Office

Office européen
des brevets

## EUROPEAN SEARCH REPORT

Application Number

EP 12 19 8001

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DENISE PRESCHER ET AL: "A tactile windowing system for blind users", PROCEEDINGS OF THE 12TH INTERNATIONAL ACM SIGACCESS CONFERENCE ON COMPUTERS AND ACCESSIBILITY, ASSETS '10, 1 January 2010 (2010-01-01), page 91, XP055056445, New York, New York, USA DOI: 10.1145/1878803.1878821 ISBN: 978-1-60-558881-0 * the whole document * | 1-10 | INV. G06F3/01 G06F3/0481 B60K37/06 |
| X | US 7 245 292 B1 (CUSTY EDWARD JOHN [US]) 17 July 2007 (2007-07-17) * column 1, line 54 - column 4, line 25; figures 1-6 * | 1-10 | |
| A | THORSTEN VÄLKEL ET AL: "Tactile Graphics Revised: The Novel BrailleDis 9000 Pin-Matrix Device with Multitouch Input", 9 July 2008 (2008-07-09), COMPUTERS HELPING PEOPLE WITH SPECIAL NEEDS; [LECTURE NOTES IN COMPUTER SCIENCE], SPRINGER BERLIN HEIDELBERG, BERLIN, HEIDELBERG, PAGE(S) 835 - 842, XP019092185, ISBN: 978-3-540-70539-0 * pages 835-839 * | 1-10 | TECHNICAL FIELDS SEARCHED (IPC) G06F G09B G01D H01H B60K |
| A | US 2008/052637 A1 (BEN-YOSEPH ROY [US] ET AL) 28 February 2008 (2008-02-28) * paragraphs [0044] - [0047]; figures 3-6 * | 10 | |
| A | WO 2011/075390 A1 (HONDA MOTOR CO LTD [JP]; SCHEUFLER NICK [US]; FEIT STEVEN; CHOI DAVE;) 23 June 2011 (2011-06-23) * the whole document * | 1-10 | |

The present search report has been drawn up for all claims

| Place of search | Date of completion of the search | Examiner |
|---|---|---|
| Munich | 15 March 2013 | Legrand, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 19 8001

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2013

| Patent document cited in search report | | Publication date | Patent family member(s) | | Publication date |
|---|---|---|---|---|---|
| US 7245292 | B1 | 17-07-2007 | NONE | | |
| US 2008052637 | A1 | 28-02-2008 | NONE | | |
| WO 2011075390 | A1 | 23-06-2011 | CA | 2779916 A1 | 23-06-2011 |
| | | | CN | 102667671 A | 12-09-2012 |
| | | | EP | 2513754 A1 | 24-10-2012 |
| | | | US | 2012260164 A1 | 11-10-2012 |
| | | | WO | 2011075390 A1 | 23-06-2011 |

EPO FORM P0459

For more details about this annex : see Official Journal of the European Patent Office, No. 12/82

**EP 2 618 238 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006268068 A